(19) Europäisches Patentamt
European Patent Office
Office européen des brevets

(11) EP 1 600 767 A1

## (12) EUROPEAN PATENT APPLICATION
published in accordance with Art. 158(3) EPC

(43) Date of publication:
30.11.2005 Bulletin 2005/48

(51) Int Cl.⁷: **G01N 27/447**

(21) Application number: 04714449.8

(86) International application number:
**PCT/JP2004/002163**

(22) Date of filing: 25.02.2004

(87) International publication number:
**WO 2004/077042 (10.09.2004 Gazette 2004/37)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 25.02.2003 JP 2003047041
06.05.2003 JP 2003128203
04.11.2003 JP 2003374792

(71) Applicant: **Mitsui Sugar Co., Ltd.**
**Chuo-ku, Tokyo (JP)**

(72) Inventors:
- **YONETA, Masahiko, c/o Mitsui Sugar Co., Ltd.**
**Osaka-shi, Osaka 542-0081 (JP)**
- **SASAKI, Yohei, c/o Mitsui Sugar Co., Ltd.**
**Nagata-ku, Kobe-shi, Hyogo 6530023 (JP)**
- **KAWAGUCHI, Makiko**
**Kobe-shi, Hyogo 652-0811 (JP)**

(74) Representative: **Vossius & Partner**
**Siebertstrasse 4**
**81675 München (DE)**

## (54) GEL FOR ELECTROPHORESIS AND PROCESS FOR PRODUCING THE SAME

(57) The present invention herein provides a gel for electrophoresis which comprises a gel prepared from single-stranded glucan which has β-1,3-glucoside bonds as a main chain and β-1,6-glucoside bonds on side chains, or a mixture of the glucan with a second polysaccharide, or acrylamide and/or derivative thereof; and a method for the preparation of a gel for electrophoresis comprising the steps of dissolving a glucan, which has β-1,3-glucoside bonds as a main chain and β-1,6-glucoside bonds on side chains, in a first solvent which can dissociate the helical structure of the glucan to thus form single-stranded glucan; removing the first solvent; dissolving the single-stranded glucan in a second solvent capable of dissolving the same; and then heat-treating the resulting solution. The pore size of the gel according to the present invention can easily be controlled, the gel permits the isolation and/or analysis of a nucleic acid or a protein whose molecular weight falls within a wider range and the gel never interferes with the detection, through the staining technique, of such a nucleic acid or a protein separated and developed on or within the gel.

EP 1 600 767 A1

**Description**

Technical Field

The present invention relates to a novel gel for use in the electrophoresis, a method for the preparation thereof and an electrophoresis method using the gel and more particularly to a novel gel used as a support when separating and/or analyzing a nucleic acid or a protein in the biochemical and medical fields through the electrophoresis technique, a method for the preparation thereof and an electrophoresis method using the gel.

Background Art

There have conventionally been used an agarose gel and a polyacrylamide gel as supports for separating and/or analyzing a nucleic acid or a protein through the electrophoresis technique. The separation and analysis using these gels are usually based on the molecular sieve effect thereof. In this respect, the pore size of these gels may vary from gel to gel and therefore, they are appropriately selected depending on the size of each particular substance to be analyzed. More specifically, an agarose gel is used for the electrophoresis of nucleic acids or proteins each having a relatively high molecular weight, while a polyacrylamide gel is used for the electrophoresis of nucleic acids or proteins each having a relatively low molecular weight.

Recently, the gel electrophoresis technique using agarose or polyacrylamide as a support has been established and accordingly, it is expected to achieve a high resolution in such an analysis because of the high precision of the molecular sieve effect of the support. However, the electrophoresis method using an agarose or polyacrylamide gel suffers from the following problems.

First of all, agarose gives a gel which has a low transparency and gets clouded. In particular, when the substance to be analyzed has a low molecular weight, it is necessary to use a gel having a higher concentration. If a gel of a higher concentration is used in the fractionation of DNA molecules having low molecular weights, however, it would be quite difficult to obtain any distinct image of detected DNA molecules after the electrophoresis thereof. Moreover, the agarose gel may include negatively charged groups such as sulfate residues and/or carboxyl groups as trace impurities, this results in an increased electroosmosis and becomes a serious problem, in particular, in the isoelectric focusing technique.

On the other hand, in case of polyacrylamide, a concentration thereof substantially ranging from 4 to 30% by mass is required for the formation of a gel having a satisfactory strength sufficient for use in electrophoresis operations. The gel of polyacrylamide having such a concentration has a small pore size and accordingly, the polyacrylamide gel may inhibit the migration of any substance having a large molecular weight among the substances which can migrate through an agarose gel having a strength sufficient for use in the electrophoresis technique. More specifically, the polyacrylamide gel would permit the migration of substances whose molecular weight falls within a narrower range as compared with the agarose gel. In addition, the preparation of a polyacrylamide gel requires the use of a quite complicated process.

Moreover, if the electrophoresis technique permits the easy extraction and recovery of a desired substance present in and separated by the gel, this analytical technique may be a useful technique for the separation and/or purification of, in particular, a protein, but the polyacrylamide gel would in general ensure only a low recovery rate of such a protein. Even when using the electroelution technique which can ensure a relatively high rate of recovery, the electrophoresis method suffers from various problems such that it requires the use of a specially designed device and it likewise requires the use of complicated operations.

In addition, it has been known that each of water-soluble glucans such as schizophyllan produced by Schizophyllum commune Fries, scleroglucan produced by Sclerotium glucanicum, lentinan, laminaran and pachyman forms a multimer having a helical structure through the tangling of several molecular chains, that if these multimers each having a helical structure are dissolved in a solvent which may dissociate the hydrogen bonds, they are dissolved therein in the single-stranded states and that when removing the solvent, from the resulting solution, a gel is formed (see, for instance, Patent Document 1 specified below).

For instance, it has been confirmed that schizophyllan is dissolved in water in the form of a triple helix (hereinafter referred to as "triple-strand") and that it is dissolved in dimethylsulfoxide in the form of a random coil (hereinafter referred to as "single-strand") formed through the disentangling of such a triple-strand (see, for instance, Non-Patent Document 1 specified below). In addition, it has been found that when an aqueous schizophyllan solution is heated to 135°C, triple-strand structure is changed to single-strand structure and the solution is cooled to form a gel (see, for instance, Non-Patent Document 2 specified below).

In this connection, it has been known that curdlan, which is a polysaccharide having a structure similar to the glucan, can be used as a gel for electrophoresis (see, for instance, Patent Documents 2 and 3), but the gel of curdlan is not transparent, and accordingly, the opaqueness thereof may come into a problem, in particular, when the spots of proteins are detected with staining technique, after proteins are separated.

Patent Document 1: Japanese Un-Examined Patent Publication Sho 56-127603;
Patent Document 2: Japanese Patent No. 2,628,229;
Patent Document 3: U.S. Patent No. 4,774,093;

Non-Patent Document 1: T. Norisue, J. Polym. Sci. Polym. Phys. Ed., 1980, 18: 547;
Non-Patent Document 2: T. Yanaki, Carbohydr. Polym., 1985, 5: 275.

Disclosure of the Invention

It is an object of the present invention to solve the foregoing problems and, more particularly, to provide a novel gel for use in the electrophoresis, which permits much simpler and more efficient isolation and/or analysis of a nucleic acid or a protein in the biochemical and medical fields through the electrophoresis technique while ensuring a higher safety, a method for the preparation thereof and an electrophoresis method using the gel.

More specifically, it is an object of the present invention to provide a gel for electrophoresis, whose pore size can easily be controlled, which permits the isolation and/or analysis of a nucleic acid or a protein whose molecular weight falls within a wider range and which never interferes with the detection, through the staining technique, of such a nucleic acid or a protein isolated and developed on or within the gel.

It is another object of the present invention to provide a method for the preparation of the foregoing gel for electrophoresis.

It is a further object of the present invention to provide an electrophoresis method which makes use of the foregoing gel for electrophoresis.

It is a still further object of the present invention to provide a method for isolating and/or purifying a nucleic acid or a protein which makes use of the foregoing gel for electrophoresis.

The inventors of this invention have conducted various studies to solve the foregoing problems, have found that the foregoing problems can be solved by preparing a gel which comprises water-soluble glucans which comprise β-1,3-glucoside bonds as a main chain and β-1,6-glucoside bonds on the side chains and which have variously different molecular weights and using the gel as a support for electrophoresis and have thus completed the present invention.

The present invention thus herein provides a gel for electrophoresis, a method for the preparation thereof, an electrophoresis method using the gel and a method for isolating and/or purifying a nucleic acid or a protein by the electrophoresis technique using the gel.

In the specification, the term "nucleic acid" should be construed as including nucleic acids simply consisting of polynucleotide chains; complexes of nucleic acids with components other than nucleotides linked thereto (for instance, glyco-nucleic acids containing a variety of saccharides bonded thereto, lipo-nucleic acids containing various kinds of lipids linked thereto, and nucleic acid binding proteins containing various kinds of proteins linked thereto); and associated products formed through the association of at least two member selected from homologous and heterologous substances of these materials.

The term "protein" herein used should be construed as including simple proteins consisting only of polypeptide chains; complex proteins containing components other than amino acids or peptides linked thereto (for instance, glycoproteins containing a variety of saccharides bonded thereto, lipo-proteins containing a variety of lipids linked thereto, and nucleic acid proteins containing various kinds of nucleic acids linked thereto); and associated products formed through the association of at least two of the foregoing substances.

1. A gel for electrophoresis comprising a gel prepared from a glucan, which has a single-stranded structure and has β-1,3-glucoside bonds as a main chain and β-1,6-glucoside bonds on side chains.

2. A gel for electrophoresis comprising a gel prepared from a mixture of a glucan, which has a single-stranded structure and has β-1,3-glucoside bonds as a main chain and β-1,6-glucoside bonds on side chains, and a second polysaccharide other than the glucan.

3. A gel for electrophoresis comprising a gel prepared from a mixture of a glucan, which has a single-stranded structure and has β-1,3-glucoside bonds as a main chain and β-1,6-glucoside bonds on side chains, and a polyacrylamide-forming composition.

4. A gel for electrophoresis comprising a gel prepared from a mixture of a glucan, which has a single-stranded structure and has β-1,3-glucoside bonds as a main chain and β-1,6-glucoside bonds on side chains; a second polysaccharide other than the glucan; and a polyacrylamide-forming composition.

5. The gel for electrophoresis as set forth in any one of the foregoing items 1 to 4, wherein the gel is a xerogel.

6. A method for the preparation of a gel for electrophoresis comprising the steps of dissolving a glucan, which has β-1,3-glucoside bonds as a main chain and β-1,6-glucoside bonds on side chains, in a first solvent which can dissociate the helical structure of the glucan to thus form single-stranded glucan ; removing the first solvent; dissolving the single-stranded glucan in a second solvent capable of dissolving the same; and then heat-treating the resulting solution.

7. A method for the preparation of a gel for electrophoresis comprising the steps of dissolving a glucan, which has β-1,3-glucoside bonds as a main chain and β-1,6-glucoside bonds on side chains, in an aqueous alkaline solution, and then neutralizing the resulting aqueous alkaline solution by the addition of a substance having an ability to neutralize alkali.

8. A method for the preparation of a gel for electrophoresis comprising the steps of dissolving a glucan, which has β-1,3-glucoside bonds as a main chain and β-1,6-glucoside bonds on side chains, in an aqueous alkaline solution; neutralizing the resulting aqueous alkaline solution by the addition of a substance having an ability to neutralize alkali; and then heat-treating the resulting solution.

9. A method for the preparation of a gel for electrophoresis comprising the steps of dissolving a glucan, which has β-1,3-glucoside bonds as a main chain and β-1,6-glucoside bonds on side chains, in a first solvent which can dissociate the helical structure of the glucan to thus form single-stranded glucan; removing the first solvent; dissolving the single-stranded glucan and a second polysaccharide other than glucan in a second solvent; and then heat-treating the resulting solution.

10. A method for the preparation of a gel for electrophoresis comprising the steps of dissolving a glucan, which has β-1,3-glucoside bonds as a main chain and β-1,6-glucoside bonds on side chains, and a second polysaccharide other than glucan in an aqueous alkaline solution; and then neutralizing the resulting aqueous alkaline solution by the addition of a substance having an ability to neutralize alkali.

11. A method for the preparation of a gel for electrophoresis comprising the steps of dissolving a glucan, which has β-1,3-glucoside bonds as a main chain and β-1,6-glucoside bonds on side chains, and a second polysaccharide other than glucan in an aqueous alkaline solution; neutralizing the resulting aqueous alkaline solution by the addition of a substance having an ability to neutralize alkali; and then heat-treating the resulting solution.

12. A method for the preparation of a gel for electrophoresis comprising the steps of dissolving a glucan, which has β-1,3-glucoside bonds as a main chain and β-1,6-glucoside bonds on side chains, in a first solvent which can dissociate the helical structure of the glucan to thus form single-stranded glucan; removing the first solvent; dissolving the single-stranded glucan and a polyacrylamide-forming composition in a second solvent; and then heat-treating the resulting solution.

13. A method for the preparation of a gel for electrophoresis comprising the steps of dissolving a glucan, which has β-1,3-glucoside bonds as a main chain and β-1,6-glucoside bonds on side chains, and a polyacrylamide-forming composition in an aqueous alkaline solution; and then neutralizing the resulting aqueous alkaline solution by the addition of a substance having an ability to neutralize alkali.

14. A method for the preparation of a gel for electrophoresis comprising the steps of dissolving a glucan, which has β-1,3-glucoside bonds as a main chain and β-1,6-glucoside bonds on side chains, and a polyacrylamide-forming composition in an aqueous alkaline solution; neutralizing the resulting aqueous alkaline solution by the addition of a substance having an ability to neutralize alkali; and then heat-treating the resulting solution.

15. A method for electrophoresis characterized in that the method uses the gel for electrophoresis as set forth in any one of the foregoing items 1 to 5, or a gel for electrophoresis prepared according to the method as set forth in any one of the foregoing items 6 to 14, as a support.

16. A method for isolating and/or purifying a nucleic acid or a protein characterized in that the method uses the gel for electrophoresis as set forth in any one of the foregoing items 1 to 5, or a gel for electrophoresis prepared according to the method as set forth in any one of the foregoing items 6 to 14, as a support.

17. A method for isolating and/or purifying a nucleic acid or a protein characterized in that the method uses the gel for electrophoresis as set forth in any one of the foregoing items 1 to 5, or a gel for electrophoresis prepared according to the method as set forth in any one of the foregoing items 6 to 14, as a support and that the gel obtained after the electrophoresis is treated with an enzyme.

18. Use of a glucan, which has a single-stranded structure and has β-1,3-glucoside bonds as a main chain and β-1,6-glucoside bonds on side chains, for the preparation of a gel for electrophoresis.

According to the gel for electrophoresis of the present invention, physical properties of the gel such as the pore size thereof can easily and widely be controlled by the adjustment of, for instance, the molecular weight of the glucan selected and the concentration thereof and, in particular, a low concentration gel of a single-stranded schizophyllan having a high molecular weight has a large pore size as compared with the polyacrylamide gel and therefore, the gel would permit the isolation and/or analysis of a nucleic acid or a protein having a high molecular weight of not less than 1000 kDa, while maintaining the higher-order structure and physiological activity of the nucleic acid or protein.

Moreover, the gel of the present invention can ensure its quite high transparency, it accordingly never interferes with the detection, through the staining technique, of such a nucleic acid or a protein isolated and developed on or within the gel and it accordingly permits the isolation and/or analysis of, for instance, proteins and DNA molecules having molecular weights falling within a wider range. In addition, the gel of the present invention makes it easy to recover the substances developed and/or separated on or within the gel and therefore, it can likewise be used as a gel for the separatory or preparative electrophoresis for the purpose of isolation.

Brief Description of the Drawings

Fig. 1 is a diagram showing the electrophoresis patterns observed for proteins having molecular weights ranging from 25 to 250 kDa which are migrated on the gels prepared in Example 3 and Comparative Examples (1) and (2).
Fig. 2 is a diagram showing the electrophoresis patterns observed for a protein (BPB) of 50 kDa migrated on two kinds of gels which have different molecular weights and concentrations.
Fig. 3 is a diagram showing the electrophoresis patterns observed for proteins having high molecular weights falling within the range of from 75 to 250 kDa which are migrated on the gels prepared in Example 5 and a comparative example described therein.
Fig. 4 is a diagram showing the electrophoresis patterns observed for proteins having high molecular weights falling within the range of from 67 to 1000 kDa which are migrated on the gels prepared in Example 6 and a comparative example described therein.
Fig. 5 is a diagram showing the electrophoresis patterns observed for two kinds of DNA molecular weight markers [(1) Smart Ladder and (2) pBR322/Msp I digest] which are migrated on the gel prepared in Example 8, while comparing them with those observed for the markers migrated on a 3% by mass agarose gel.
Fig. 6 is a diagram showing the electrophoresis pattern observed for a protein molecular weight marker migrated on a disc gel for electrophoresis of a denaturing system, prepared from single-stranded schizophyllan and starch.
Fig. 7 is a diagram showing the comparison of the electrophoresis pattern observed for DNA migrated on a gel prepared from a mixture of single-stranded schizophyllan and commercially available agar, with that observed for the same DNA migrated on a gel prepared from the commercially available agar alone.
Fig. 8 is a diagram showing the separation patterns observed for proteins having molecular weights ranging from 10 to 250 kDa which are migrated on the gels prepared in Example 16 and a comparative example described therein.
Fig. 9 is a diagram showing the separation patterns observed for proteins having molecular weights ranging from 4 to 34.5 kDa which are migrated on the gels prepared in Example 20 and a comparative example (17% polyacrylamide gel) described therein.
Fig. 10 is a diagram for illustrating an example of a gradient gel-forming device.
Fig. 11 is a diagram showing the separation patterns observed for proteins having molecular weights ranging from 10 to 250 kDa which are migrated on the gels prepared in Example 22 and a comparative example (4-20% gradient polyacrylamide gel) described therein.
Fig. 12 is a diagram showing the separation patterns observed for proteins having molecular weights ranging from 10 to 250 kDa which are migrated on the molecular weight-gradient [45-200 ($\times$ 10$^4$)] glucan gel prepared in Example 23 and a PA (polyacrylamide) concentration-gradient gel.
Fig. 13 is a diagram showing the separation patterns observed for proteins having molecular weight ranging from 10 to 250 kDa which are migrated on the gel prepared in Example 24.
Fig. 14 is a diagram showing the electrophoresis pattern observed in Example 6 and the separation pattern observed in Example 25 for proteins having molecular weights ranging from 232 to 669 kDa.
Fig. 15 is a diagram showing the separation patterns observed in Example 27 and a comparative example described therein for proteins having isoelectric points ranging from 4.45 to 9.6.
Fig. 16 is a diagram showing the two-dimensional separation pattern [first dimension: schizophyllan gel; second dimension: PA (polyacrylamide) gel (both of these gels are ones of native systems)] observed in Example 28 for proteins having molecular weights ranging from 12.2 to 232 kDa and pI (isoelectric points) ranging from 4.45 to 9.6.
Fig. 17 is a diagram showing the two-dimensional separation pattern [first dimension (native system): schizophyllan gel; second dimension (denaturing system): schizophyllan gel] observed in Example 28 for proteins having molecular weights ranging from 12.2 to 232 kDa and pI ranging from 4.45 to 9.6.
Fig. 18 is a diagram showing the separation pattern observed in Example 30 for proteins having molecular weights ranging from 232 to 669 kDa.

Best Mode for Carrying Out the Invention

The glucans serving as raw materials used for preparing the gels according to the present invention are water-soluble ones and specific examples thereof include schizophyllan produced by Schizophyllum commune Fries, scleroglucan produced by Sclerotium glucanicum, lentinan, laminaran and pachyman, with schizophyllan and scleroglucan being preferably used herein. As has already been discussed above, it has been known that each of these polysaccharides forms a multimer having a helical structure through the entangling of several molecular chains, that if these multimers each having a helical structure are dissolved in a solvent which may dissociate the hydrogen bond, they are dissolved or dispersed therein in the single-stranded states and that when removing the solvent from the resulting solution, a gel is formed.

For instance, it has been confirmed that schizophyllan is dissolved in water in the form of triple-stranded and that it is dissolved in dimethylsulfoxide in the form of random coils (hereinafter referred to as "single-strand(s)") formed through the disentangling of such triple-strands. As such solvents which can dissociate the hydrogen bonds of the triple-strands and disperse the same in the form of the single-stranded state, usable herein include, for instance, aqueous alkaline solutions having a concentration of not less than 0.15M, and triethylene-diamine cadmium hydroxide in addition to dimethylsulfoxide.

Alternatively, it has likewise been known that the triple-strands of schizophyllan are melted in the form of its single-stranded states when an aqueous schizophyllan solution is heated at a temperature of 135°C and that a gel is formed when the aqueous solution is again cooled.

As will be predicted from or suggested by the foregoing knowledges, methods for preparing gels of water-soluble glucans include, for instance, (1) a method for forming a gel through heating; (2) a method for forming a gel through dialysis; and (3) a method for forming a gel through neutralization.

In the method (1) for forming a gel through heating, glucan is first dissolved in a first solvent capable of disentangling triple-stranded glucan into single-stranded ones such as an aqueous alkaline solution, for instance, an aqueous solution of an alkali metal compound or an alkaline earth metal compound such as sodium hydroxide, potassium hydroxide or barium hydroxide (for instance, a 0.2M aqueous sodium hydroxide solution), dimethylsulfoxide, triethylene-diamine cadmium hydroxide or an aqueous solution of urea, in a concentration of not more than about 1% by mass when it is desirable to inhibit any gelation thereof; the first solvent is then removed from the solution by a method such as a dialysis or ion-exchange method; the single-stranded schizophyllan thus obtained are dissolved in an appropriate second solvent such as water, or a buffering solution; the resulting solution is heated at a temperature ranging from 60 to 135°C, preferably 80 to 120°C for a time ranging from several seconds to several hours, preferably 10 to 60 minutes; and then the solution is cooled down to, for instance, a temperature in the proximity to room temperature to thus form a gel.

For instance, glucan is dissolved in a first solvent in a low concentration, then the solvent is removed by dialysis (the solution is not a gel at this stage) to thus give a dialyzed liquid and the latter is lyophilized to thus form single-strands of glucan (solid). The single-stranded glucan is dissolved in a solvent such as water and then heated to form a gel.

Alternatively, it is also possible to obtain a gel by dissolving glucan in a first solvent in a high concentration, then removing the solvent through dialysis (the solution is converted into a gel at this stage), lyophilizing the resulting gel to thus obtain glucan, dissolving the glucan thus obtained in a solvent such as water and then heating the resulting solution.

The method (2) for forming a gel through dialysis is one which comprises the steps of dissolving glucan in a first solvent in a high concentration preferably ranging from 1 to 10% by mass to form a solution of single-stranded glucan and then removing the solvent by means of, for instance, dialysis to thus form a gel.

The method (3) for forming a gel through neutralization is one which comprises the steps of dissolving triple-stranded glucan in an aqueous alkaline solution and then neutralizing the alkaline solution with an alkali-neutralizing substance (without removing the solvent through, for instance, dialysis) to thus form a gel, as disclosed in Patent Document 2. As such alkali-neutralizing substances, usable herein are, for instance, at least one member selected from a variety of acids as disclosed in Patent Document 2. Moreover, it is also possible to use at least one member selected from the group consisting of acid amides and/or esters as such neutralizing substances. Examples of acids include organic acid such as formic acid, acetic acid, propionic acid and butanoic acid and inorganic acids such as sulfuric acid and phosphoric acid. In addition, examples of acid amides and esters are acid amides of the foregoing acids with ammonia and amines such as linear or branched alkylamines having 1 to 4 carbon atoms or linear or branched dialkylamines having 2 to 8 carbon atoms such as formamide; and esters of the foregoing acids with alcohols, preferably linear or branched alcohols having 1 to 4 carbon atoms. Also usable herein as the alkali-neutralizing substances include, for instance, acid anhydrides and halides (preferred halides include fluorides, chlorides and bromides) whose acid moieties are derived from the foregoing acids. The amount of an acid, an acid amide, an ester, an acid anhydride or an acid halide as the alkali-neutralizing substance is not less than 0.6 equivalent, preferably 0.6 to 10 equivalents and particularly preferably 1 to 4 equivalents per unit equivalent of alkali present in the aqueous alkaline solution.

The gels prepared according to these methods have characteristic properties almost similar to one another and correspondingly have a strength sufficient for use as a gel for electrophoresis according to the present invention.

However, preferred are those prepared by the method for forming a gel through heating and the method for forming a gel through neutralization, which makes use of an acid amide and/or an ester, while taking into consideration the ability to easily control the shape of the gel for electrophoresis and the ability to easily control the concentration of glucan.

In this connection, it has been known that the single-stranded glucan form helical structures with the elapse of time in an aqueous solution to thus form triple-strands of glucan. In the gels prepared according to the method for forming a gel through heating, the method for forming a gel through dialysis and the method for forming a gel through neutralization, the single-stranded glucan may form helical structures in the course of gelation to thus form triple-strands of glucan. Triple-stranded glucan may coexist in the single-stranded glucan powder used in the gel-forming method through heating during the preparation of the powder, but if the concentration of the single-stranded glucan present in the powder is not less than 0.2% by mass, the powder can be used in the preparation of a gel according to the present invention.

The method for the preparation of a gel for electrophoresis according to the present invention will hereinafter be described in more specifically. As has already been described above, such a gel can be prepared from single-stranded glucan according to a method such as (1) a method for forming a gel through heating, (2) a method for forming a gel through dialysis or (3) a method for forming a gel through neutralization and in any case, an appropriate gel-forming device is employed. More specifically, in the method (1) for forming a gel through heating, a slab gel or a disc gel for electrophoresis can be prepared using a gel-forming device equipped with a heating means. Moreover, in the method (2) for forming a gel through dialysis, a slab gel for electrophoresis can be prepared using a dialysis gel-forming device equipped with a combination of a membrane for dialysis and a reinforcing plate. Further, in the method (3) for forming a gel through neutralization, a gel having an arbitrary shape such as a slab gel or a disc gel for electrophoresis can be prepared using a usual gel-forming device. The methods for forming a gel through heating and through neutralization would permit the easy preparation of a variety of gradient gels such as a concentration-gradient gel, a molecular weight-gradient gel, a molecular species-gradient gel and a pH-gradient gel.

In addition, it is also possible to prepare a gel comprising several kinds of layers differing from one another in, for instance, the concentration, molecular weight, molecular species and pH.

Moreover, it may often be difficult to form a well for receiving a sample (hereinafter simply referred to as "sample well") on a schizophyllan gel, which is required for the vertical electrophoresis device. In this case, almost all of the gel for electrophoresis may first be formed from the schizophyllan gel and thereafter the portion required for forming the sample well may be formed from another gel, which permits the easy formation of such a sample well, such as an agarose gel or a polyacrylamide gel.

Such a slab gel in general has, for instance, the following size: width × length × thickness = 70mm × 85mm × 3mm and such a disc gel in general has, for instance, the following size: diameter × length = 5mm × 85mm, but the present invention is not restricted to these specific sizes and a gel having any size can, if necessary, be prepared.

The gels prepared by the foregoing methods are quite excellent in the transparency, never interfere with the detection of spots of nucleic acids (DNA, RNA) or proteins developed on or within the gel according to a variety of staining techniques, in particular, the detection of the spots of nucleic acids (DNA, RNA) according to the ethidium bromide-staining technique and thus permit the photographic record of the clear detected images. In other words, these gels have quite excellent and useful characteristic properties as the gels for electrophoresis as comp ared with the known curdlan gel.

The properties of the gel according to the present invention such as the strength and pore size thereof can easily be controlled by adjusting, for instance, the molecular weight, concentration and/or kind of glucan to be used. Specifically speaking, the glucan used in the present invention is single-stranded one having a molecular weight preferably ranging from 10,000 to 5,000,000 and therefore, a gel having a high concentration can be prepared in case of low molecular weight glucans, while a gel having a low concentration can be prepared in case of high molecular weight glucans. More specifically, the present invention permits the preparation of a gel whose glucan concentration ranges from 0.2 to 50% by mass. The single-stranded glucan, in particular, that having a molecular weight ranging from 500,000 to 5,000,000 permits the preparation of a gel whose strength is sufficient for the gel to withstand various operations such as staining and destaining after the electrophoresis even at a low concentration. The low concentration gel of such a high molecular weight single-stranded glucan provides pores having a pore size larger than that of the pores provided by the polyacrylamide gel and therefore, the former gel can be applied to the isolation and/or analysis of high molecular weight nucleic acids or proteins. For instance, the gel permits the isolation of high molecular weight proteins of not less than 1000 kDa, which cannot run through the polyacrylamide gel, even under the native conditions in the absence of any denaturing agent while maintaining the higher-order structures and physiological activities thereof.

Moreover, the gel of the present invention can ensure a higher rate of recovery of the substance developed on the gel as compared with the polyacrylamide gel and therefore, it may be useful as a gel for separatory or preparative electrophoresis for the purpose of the recovery of the substance. Accordingly, the electrophoresis method which makes use of the gel according to the present invention may become a useful means for isolating and purifying substances derived from biological origins such as nucleic acids and proteins. Specific methods for recovering the substances isolated and developed on or within the gel after the electrophoresis include, for instance, a method in which the substances are eluted with an elutant, a method in which the substance is eluted through freezing and thawing, a method for eluting through electrophoresis, and an enzymatic method wherein the gel is dissolved with an enzyme having a $\beta$-1,3-glucanase activity. In particular, the enzymatic method permits the recovery of any desired nucleic acid or protein at a rate of recovery of almost 100% in theory while maintaining its natural state or without being accompanied by any denaturation, since this method can ensure the complete dissolution of the whole gel without requiring any treatment such as heating and/or treatments with organic solvents.

The gel of the present invention may be one prepared by converting a single-stranded glucan alone into a gel, or one obtained by converting a combination of such a single-stranded glucan with at least one second polysaccharide selected from, for instance, agarose, locust bean gum, TARA gum, guar gum, tamarind gum, pullulan, dextran, starch and cellulose into a gel. The gel of the combination of the single-stranded glucan with a second polysaccharide can be prepared according to any one of the foregoing methods, (1) a method for forming a gel through heating, (2) a method for forming a gel through dialysis or (3) a method for forming a gel through neutralization. The gels thus prepared can be used as excellent supports for electrophoresis.

When using a single-stranded glucan and a second polysaccharide in combination, the rate of the single-stranded glucan in the combination of these two components preferably ranges from 0.1 to 100% by mass and more preferably 1 to 90% by mass on the basis of the total mass of the single-stranded glucan and the second polysaccharide. If the rate of the single-stranded glucan is less than 0.1% by mass, the intended purpose of the present invention cannot satisfactorily be achieved.

As low purity agarose, there may be listed, for instance, agarose products currently put on the market. Most of the gels prepared from the same contain several per cent of negatively charged groups such as sulfate residues and carboxyl groups as impurities, they accordingly have high electro-osmotic powers and when using in the electrophoresis, they can show only poor abilities to isolate nucleic acids or proteins. However, the inventors of this invention have found that when a gel is prepared using such agarose in combination with a single-stranded glucan, the electroosmosis power thereof is relieved and the resulting gel shows a considerably improved ability of separating nucleic acids or proteins during the electrophoresis.

The agarose currently used for electrophoresis is a highly purified product obtained by thoroughly removing impurities from the product extracted from seaweeds. For this reason, the production of the agarose for electrophoresis requires a great deal of labor and great expense and accordingly, it is quite expensive. As has been discussed above, however, the use of the agarose currently put on the market in combination with a single-stranded glucan would permit the preparation of a gel having an excellent ability of separating nucleic acids or proteins when using the same in the electrophoresis, which is identical to that observed for the gel prepared from a highly purified agarose and accordingly, the present invention can thus easily provide, at a low cost, a gel for electrophoresis comparable to that prepared from a highly purified agarose.

The glucans having $\beta$-1,3-glucoside bonds as a main chain have widely been used in, for instance, foods as polysaccharides thickener and therefore, the safety thereof is considerably high.

The gel according to the present invention may be either one prepared from a single-stranded glucan alone or one prepared from a combination of such a glucan with a second polysaccharide, but it may further be a gel obtained from the foregoing components further combined with acrylamide and/or acrylamide derivatives. The gel can be prepared from a single-stranded glucan combined with an acrylamide and/or an acrylamide derivative, according to any one of the foregoing methods, that is, (1) a method for forming a gel through heating, (2) a method for forming a gel through dialysis or (3) a method for forming a gel through neutralization, with the method (1) for forming a gel through heating and the method (3) for forming a gel through neutralization being preferably used in the invention. The gels thus prepared can be used as excellent supports for electrophoresis.

When using a single-stranded glucan in combination with an acrylamide and/or an acrylamide derivative, the rate of the single-stranded glucan in the combination of these components preferably ranges from 0.1 to 100% by mass and more preferably 1 to 90% by mass on the basis of the total mass of the single-stranded glucan and the acrylamide and/or the acrylamide derivative. If the rate of the single-stranded glucan is less than 0.1% by mass, the intended purpose of the present invention cannot satisfactorily be achieved.

The gel according to the present invention prepared from a single-stranded glucan combined with an acrylamide and/or an acrylamide derivative can be prepared by, for instance, a method comprising the steps of dissolving a glucan, which has $\beta$-1,3-glucoside bonds as a main chain and $\beta$-1,6-glucoside bonds on side chains, in a first solvent which can dissociate the helical structure of the glucan to thus form single-stranded glucan; removing the first solvent; dissolving the single-stranded glucan and a polyacrylamide-forming composition in a second solvent; and then heat-treating the resulting solution; a method comprising the steps of dissolving a glucan, which has $\beta$-1,3-glucoside bonds as a main chain and $\beta$-1,6-glucoside bonds on side chains, and a polyacrylamide-forming composition in an aqueous alkaline solution; and then neutralizing the resulting aqueous alkaline solution by the addition of a substance having an ability to neutralize alkali; or a method comprising the steps of dissolving a glucan, which has $\beta$-1,3-glucoside bonds as a main chain and β-1,6-glucoside bonds on side chains, and a polyacrylamide-forming composition in an aqueous alkaline solution; neutralizing the resulting aqueous alkaline solution by the addition of a substance having an ability to neutralize alkali; and then heat-treating the resulting solution.

The polyacrylamide-forming composition comprises a monomer, a crosslinking agent, a polymerization initiator, a polymerization promoter and a solvent and further the composition may optionally comprise a denaturant and a reducing agent. Examples of monomers include acrylamide and N-substituted acrylamide derivatives such as those represented by the general formula: $CH_2=CH-CONH-(CH_2)_n-R$ (in the formula, n is an integer ranging from 1 to 5 and R represents an acidic group such as a carboxyl group, a sulfate residue or a phosphate residue, or a basic group such as a dimethylamino group, a diethylamino group, or a morpholino group). The crosslinking agent may be, for instance, N,N'-methylene-bis-acrylamide; the polymerization promoter may be, for instance, N,N,N',N'-tetramethylethylene-diamine (TEMED); the polymerization initiator may be, for instance, ammonium persulfate; and examples of solvents include water and buffering solutions having a pH ranging from 3 to 11. In addition, examples of denaturants are SDS, urea, polyoxyethylene isooctyl phenyl ether (Triton X (registered trademark)), 3-[(3-coramide-propyl)-dimethyl-ammonio]-1-propane-sulfonic acid (CHAPS) and examples of reducing agents are 2-mercapto-ethanol and dithiothreitol.

Acrylamide and N,N'-methylene-bis-acrylamide are separately put on the market as products of electrophoretic grades and a mixture containing acrylamide and N,N'-methylene-bis-acrylamide in a desired ratio has recently been commercially available. Commercially available acrylamide/N,N'-methylene-bis-acrylamide mixtures have a mixing ratio ranging from 19/1 to 37.5/1.

The N-substituted acrylamide derivative may be, for instance, products available from Amersham Pharmacia Corp. under the trade name of "Immobiline (registered trademark) II". "Immobiline (registered trademark)" products include those having a variety of pK depending on the difference in the suffix n and the substituent R in the foregoing general formula and those having pK values of 3.6, 4.6, 6.2, 7.0, 8.5 and 9.3 are commercially available.

The foregoing reagents are, in themselves, sold in the form of a solution (0.2M) used for preparing a gel. In practice, a gel having a desired pH gradient can be prepared by admixing the foregoing providing "Immobiline (registered trademark)" products having different pK values to thus prepare stock solutions having the pH values corresponding to the lower and upper limits in the desired gradient range, respectively and then mixing them with the commercially available acrylamide (using a mixture with N,N'-methylene-bis-acrylamide), while giving a gradient to the mixing ratio and finally copolymerizing these monomers.

In the preparation of the gel having a pH gradient according to the present invention using single-stranded glucan and acrylamide and/or an acrylamide derivative, the glucan concentration in the resulting gel preferably ranges from 0.2 to 50% by mass; the concentration of the acrylamide present in the gel preferably ranges from 0.01 to 10% by mass and more preferably 0.1 to 4% by mass; and that of the acrylamide derivative present in the gel preferably ranges from 0.002 M to 0.2 M and more preferably 0.01 M to 0.03 M.

As has been described above, it has been known that the glucan used in the present invention forms a gel under specific conditions, but it has never been known prior to the present invention that this gel or a gel prepared from the glucan combined with a second polysaccharide or acrylamide and/or an acrylamide derivative has excellent characteristic properties as a gel for electrophoresis and this fact has for the first time been discovered by the inventors of this invention.

Examples

The present invention will hereinafter be described in more detail with reference to the following Examples, but the present invention is not restricted to these specific Examples at all.

Example 1: Preparation of Single-stranded Schizophyllan

A. Triple-stranded schizophyllan (10.0 g) having a helical structure (molecular weight thereof as the triple-strand: about 450,000) was dissolved in 1000 mL of a 0.5N-NaOH solution at room temperature with stirring. The resulting solution was packed in a cellulose tube (having a pore size of 50Å) and then it was dialyzed against deionized water till the dialyzate became neutral. Thereafter, the aqueous schizophyllan solution remaining in the cellulose tube was lyophilized to thus give 9.79 g of single-stranded schizophyllan having a molecular weight of about 150,000.

B. Triple-stranded schizophyllan (5.0 g) having a helical structure (molecular weight thereof as the triple-strand: about 6,000,000) was dissolved in 100 mL of a 0.5N-NaOH solution at room temperature with stirring. The resulting solution was packed in a cellulose tube and then it was dialyzed against deionized water till the dialyzate became neutral. Thereafter, the aqueous schizophyllan solution remaining in the cellulose tube was lyophilized to thus give 4.85 g of single-stranded schizophyllan having a molecular weight of about 2,000,000.

C. Triple-stranded schizophyllan (10.0 g) having a helical structure (molecular weight thereof as the triple-strand: about 150,000) was dissolved in 2000 mL of a 0.5N-NaOH solution at room temperature with stirring. The resulting solution was packed in a cellulose tube and then it was dialyzed against deionized water till the dialyzate became neutral. Thereafter, the aqueous schizophyllan solution remaining in the cellulose tube was transferred to another container and then 2000 mL of acetone was gradually added to the aqueous solution to thus precipitate the schizophyllan present in the solution. Then the precipitate was recovered according to the filtration technique, followed by drying the same at 60°C overnight under a reduced pressure to thus give 9.2 g of single-stranded schizophyllan having a molecular weight of about 50,000.

In this respect, the three methods used above are ones for preparing single-stranded schizophyllan starting from triple-stranded schizophyllan having a helical structure and all of these methods permit the preparation of single-stranded schizophyllans irrespective of the molecular weights thereof.

Example 2: Preparation of Gel

1-1. Preparation of Slab Gel According to Heating Method for Forming Gel

The single-stranded schizophyllan prepared in the section A, B or C of Example 1 was homogenized together with deionized water to form a suspension of the single-stranded schizophyllan. The suspension was deaerated under a reduced pressure, introduced into a heating type gel-forming device and then converted into a gel by heating the same at 120°C for 20 minutes to thus give a slab gel for electrophoresis (70mm × 85mm × 3mm).

1-2. Preparation of Denaturing Type Disc Gel According to Heating Method for Forming Gel

The single-stranded schizophyllan prepared in the section A, B or C of Example 1 was homogenized together with 11.1 mL of deionized water and 3.75 mL of a 1.5 M Tris-HCl buffering solution (pH 8.8), followed by the deaeration of the resulting dispersion under a reduced pressure and the subsequent addition of 0.15 mL of a 10% SDS aqueous solution to thus give a suspension of the single-stranded schizophyllan. This liquid was then introduced into a glass tube (diameter × length = 5mm × 100mm), and then converted into a gel by heating the same at 120°C for 20 minutes to thus give a denaturing type disc gel for electrophoresis (diameter × length = 5mm × 85mm).

1-3. Preparation of Native Disc Gel According to Heating Method for Forming Gel

The single-stranded schizophyllan prepared in the section A, B or C of Example 1 was homogenized together with 15 mL of deionized water and 5 mL of a 1.5M Tris-HCl buffering solution (pH 8.8) to thus give a suspension of the single-stranded schizophyllan. The resulting liquid was deaerated under a reduced pressure, introduced into a glass tube (diameter × length = 5mm × 100mm), and then converted into a gel by heating the same at 120°C for 20 minutes to thus give a native disc gel for electrophoresis (diameter × length = 5mm × 85mm).

1-4. Preparation of Slab Gel by Neutralization Method for Forming Gel

Triple-stranded schizophyllan (1.5 g) having a helical structure (molecular weight thereof as the triple-strand: about 450,000) was dissolved in 25 mL of a 0.5N-NaOH solution at room temperature with stirring. The resulting solution was neutralized with a 5M acetic acid solution while maintaining the temperature thereof at 55°C. The neutralized solution was quickly introduced into a gel-forming device and converted into gel through cooling to thus give a slab gel for electrophoresis.

In this connection, Tables 1 to 3 given later show the relationships between the conditions of gels, and the concentration and molecular weight of the single-stranded schizophyllan, the heating temperature and heating time used when preparing a gel from single-stranded schizophyllan according to the method for forming a gel through heating. When preparing a gel from single-stranded schizophyllan according to the method for forming a gel through heating, the higher the concentration of the single-stranded schizophyllan, the higher the molecular weight thereof, the higher the heating temperature and the longer the heating time, the stronger the gel formed.

Evaluation of Gel Strength

A gel was prepared in a container for determining gel-strength (a sample tube of 30 mL) according to the method for forming a gel through heating, the breaking strength thereof at 20°C was determined using a rheometer (Model NRM-2010J-CW available from FUDO Industries, Co., Ltd.) and each gel sample was evaluated on the basis of the following criteria: +++: the gel sample having a breaking strength of not less than 500 g/cm$^2$; ++: the gel sample having a breaking strength of less than 500 g/cm$^2$ and not less than 50 g/cm$^2$; and +: the gel sample having a breaking strength of less than 50 g/cm$^2$.

Determination of Molecular Weight of Glucan

A predetermined amount of a glucan sample was dissolved in water and the limiting viscosity thereof at 25 °C was determined using a Ubbellohde viscometer. Thus, the average of molecular weight of each sample was determined on the basis of the relationship between the limiting viscosity and the molecular weight established by T. Norisue et al. (Norisue et al., J. Polym. Sci. Polym. Pys. Ed., 1980, 18:547).

The triple-stranded glucan forms a soluble complex with Congo Red in an aqueous solution and the maximum absorption wavelength at the visible region is shifted towards the longer wavelength side as compared with the maximum absorption wavelength of Congo Red. Contrary to this, the single-stranded glucan never form a complex with Congo Red. Accordingly, the determination of the maximum absorption wavelength of a mixed solution containing a glucan and Congo Red would permit the discrimination of the single-stranded glucan from the triple-stranded one (K. Tabata et al., Carbohydrate Research, 1981, 89:121-135). In addition, when single-stranded and triple-stranded glucans are present as a mixture, the rate of either the single-stranded glucan or the triple-stranded one can be determined on the basis of the ratio of peak areas determined by the differential scanning calorimeter.

Table 1

| Gel Concn. (% by mass) | Gel Strength |
|---|---|
| 1 | + |
| 3 | ++ |
| 5 | +++ |
| Molecular Weight of Single-stranded Schizophyllan: 800,000 Heating Conditions: 120°C, for 20 minutes | |

Table 2

| Molecular Weight ($\times 10^4$) | Gel Strength |
|---|---|
| 5 | + |
| 15 | + |
| 50 | ++ |
| 80 | ++ |
| 200 | +++ |
| Concn. of Single-stranded Schizophyllan: 3% Heating Conditions: 120°C, for 20 minutes | |

Table 3

| Heating Temp. (°C) | Heating Time (min) | Gel Strength |
|---|---|---|
| 120 | 20 | +++ |
| 120 | 60 | +++ |
| 100 | 20 | ++ |
| 100 | 60 | ++ |
| 100 | 120 | +++ |

Table 3  (continued)

| Heating Temp. (°C) | Heating Time (min) | Gel Strength |
|---|---|---|
| 80 | 20 | ++ |
| 80 | 60 | ++ |
| 60 | 20 | + |
| 60 | 60 | + |
| Molecular Weight of Single-stranded Schizophyllan: 800,000 | | |
| Concn. of Single-stranded Schizophyllan: 5% | | |

In addition, the following Table 4 shows the absorbance at a wavelength ranging from 700 nm to 220 nm observed for the gel prepared in Example, as well as (1) polyacrylamide gel prepared from a solution having a concentration of 10% by mass (Comparative Example 1); (2) an agarose gel (Agarose LE available from Wako Pure Chemical Industries, Ltd.) prepared from a solution having a concentration of 1% by mass (Comparative Example 2); and (3) a curdlan gel (Curdlan available from Wako Pure Chemical Industries, Ltd.) prepared from a solution having a concentration of 1% by mass (Comparative Example 3), prepared by way of comparative examples. These measured data clearly reflect the extent of clouding observed for the gel formed, and the degree of interference accompanied when detecting DNA or proteins on the basis of the ultraviolet absorption spectroscopy. The absorbance of the gel prepared in Example, determined at a wavelength falling within the visible light region, was found to be almost identical to that observed for the polyacrylamide gel now conventionally used as a support for electrophoresis, but the absorbance of the former, determined at a wavelength falling within the region of ultraviolet rays was found to be identical to or slightly smaller than that observed for the latter. Further, the comparison of these spectral data of the gel prepared in Example with the absorbance data observed for the agarose gel and the curdlan gel clearly indicates that the former is distinctly smaller than the latter. In other words, it has been confirmed that the gel of the present invention prepared in Example is excellent in the transparency over a wider wavelength range as compared with the conventional gels for electrophoresis and that it is more favorably used as a gel for electrophoresis.

Table 4:

| Absorbance | | | | | | |
|---|---|---|---|---|---|---|
| Ex. No. | Gel | Wavelength | | | | |
| | | 700 | 600 | 400 | 260 | 220 |
| Ex. | 6% by mass single-stranded schizophyllan gel | 0.008 | 0.014 | 0.074 | 0.609 | 0.936 |
| 1* | 10% by mass polyacrylamide gel | 0.002 | 0.003 | 0.008 | 0.628 | 2.819 |
| 2* | 1% by mass agarose gel | 0.158 | 0.264 | 0.784 | 2.736 | 3.344 |
| 3* | 1% by mass curdlan gel | 0.169 | 0.268 | 0.885 | 3.225 | 3.992 |

*: Comparative Example

2. Preparation of Slab Gel by Gel-Forming Method Through Dialysis

Triple-stranded schizophyllan (1.5 g) having a helical structure (molecular weight thereof as the triple-strand: about 450,000) was dissolved in 25 mL of a 0.5M-NaOH solution at room temperature with stirring. The resulting solution was introduced into a gel-forming device provided with a dialysis means and dialyzed against deionized water till the dialyzate became neutral to thus give a slab gel (150mm × 100mm × 3mm) for electrophoresis.

Example 3: Slab Gel Electrophoresis of Proteins

A slab gel (70mm × 85mm × 3mm) having a glucan concentration of 6% by mass was prepared from the single-stranded schizophyllan having a molecular weight of about 150,000 prepared in Example 1 by the same procedures used in the section 1-1 of Example 2. The resulting gel was immersed, overnight, in a gel buffer (ion-exchanged water/1.5 M Tris-HCl buffer (pH 8.8)/10% SDS solution having a mixing ratio of 111: 37.5: 1.5 (v/v)) to thus equilibrate the gel. Then this equilibrated gel was transferred to the gel tray of a submarine type small-sized electrophoresis device filled with a running buffer (25mM Tris, 192 mM glycine, 0.1% SDS, pH 8.3) and then a protein molecular weight marker (BIO RAD, Precision Standard, Molecular Weight Range: 10-250 kDa) was run at a constant current of 20 mA till a marker dye BPB (Bromophenol Blue) moved up to a position about 5 mm apart from the edge of the gel.

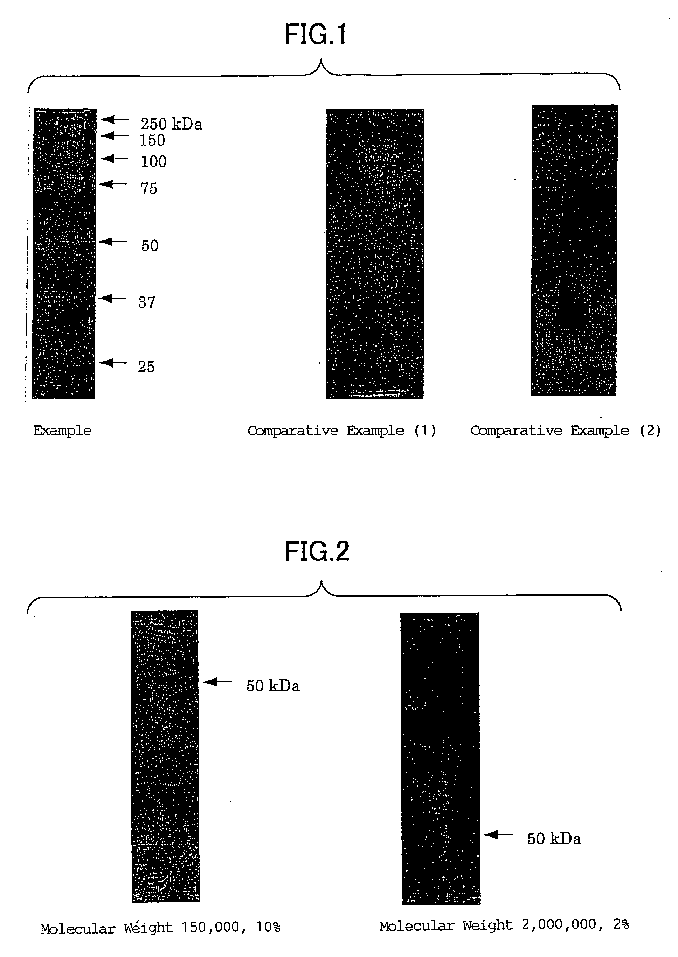

Electrophoresis was likewise conducted using (1) 10% polyacrylamide gel and (2) 1.5% agarose gel by way of comparative example. The proteins, after running were detected by the Coomassie Brilliant Blue R250-staining technique. Fig. 1 shows the separation patterns observed in Example and Comparative Examples. As a result, it was found that the gel prepared in Example showed the resolution almost identical to that observed for the 10% polyacrylamide gel (1) as a comparative Example, it likewise showed a clear isolation pattern for, in particular, high molecular weight proteins each having a molecular weight falling within the range of from 75 kDa to 250 kDa. Therefore, this clearly indicates that the gel of the Example shows excellent molecular sieve effect. Contrary to this, it was found that such proteins were hardly separated by the 1.5% agarose gel (2) as a comparative example.

Example 4: Slab Gel Electrophoresis of Proteins

A slab gel (70mm × 85mm × 3mm) having a glucan concentration of 10% by mass or 2% by mass was prepared from the single-stranded schizophyllan having a molecular weight of about 150,000 or 2,000,000 prepared in Example 1 by the same procedures used in the section 1-1 of Example 2. Subsequently, electrophoresis was carried out by the procedures similar to those used in Example 3. Fig. 2 shows separation patterns thus obtained. The following Table 5 shows the relationships between the glucan concentration and the electrophoretic migration of the protein of 50 kDa relative to BPB. The results thus obtained clearly indicate that the higher the glucan concentration, the lower the relative migration of the protein. Thus, it has been confirmed that the pore size of the gel can be controlled by adjusting the glucan concentration.

Table 5

| Mol. Wt. of Glucan | Concn. of Glucan | Relative Mobility |
|---|---|---|
| 2,000,000 | 2% | 0.86 |
| 800,000 | 6% | 0.42 |
| 150,000 | 10% | 0.20 |

Example 5: Denaturing Disc Electrophoresis of Proteins

A denaturing disc gel for electrophoresis having a glucan concentration of 6% by mass was prepared from the single-stranded schizophyllan having a molecular weight of about 150,000 prepared in Example 1 by the same procedures used in the section 1-1 of Example 2. Moreover, a stacking gel was formed thereon by dissolving 6.1 mL of deionized water, 1.3 mL of a 30% acrylamide solution, 2.5 mL of a 0.5M Tris-HCl buffer solution (pH 6.8) and 0.1 mL of a 10% SDS solution together, deaerating the resulting solution, mixing the resulting solution with 10 µL of TEMED (N,N,N',N'-tetramethyl-ethylenediamine) and 50 µL of a 10% APS (ammonium persulfate) solution, pouring the mixed solution thus prepared and converting the same into a gel, in such a manner that the thickness of the stacking gel was equal to 5 mm. The disc gel provided with a stacking gel having a thickness of 5 mm thus formed on the top thereof was fitted to a disc electrophoresis device, a running buffer (25mM Tris, 192mM glycine, 0.1% SDS, pH 8.3) was introduced into the upper and lower baths of the device and then a protein molecular weight marker (BIO RAD, Precision Standard, Molecular Weight Range: 10-250 kDa) was run at a constant current of 5 mAper one disc gel till a marker dye BPB moved up to a position about 5 mm apart from the bottom edge of the gel.

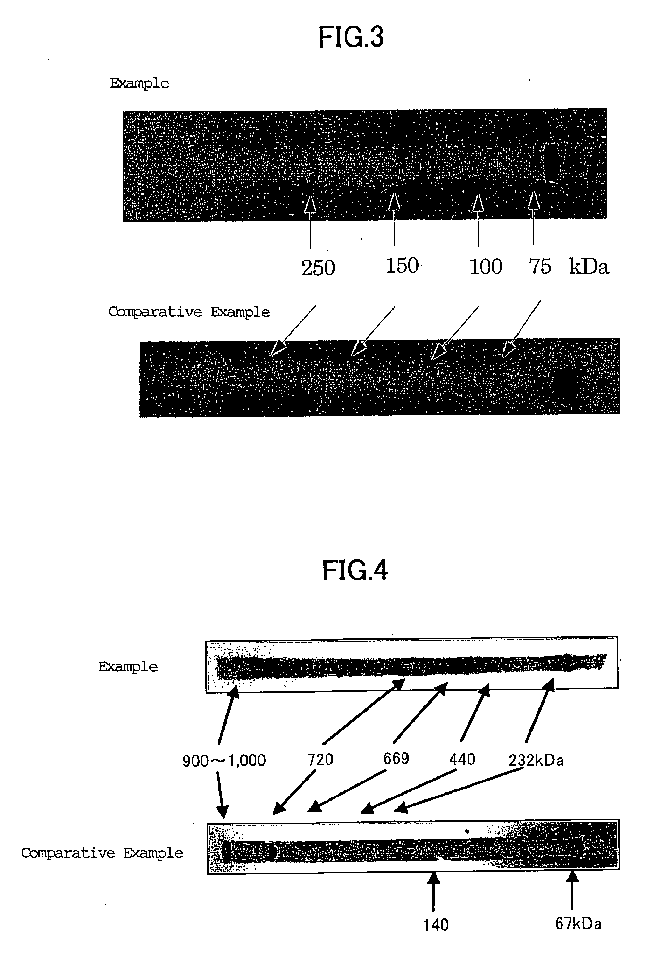

By way of comparative example, the protein molecular weight marker was run by the same procedures used in this Example using a 5% by mass polyacrylamide disc gel prepared from 5.73 mL of deionized water, 1.67 mL of a 30% acrylamide solution, 2.5 mL of a 1.5M Tris-HCl buffer solution (pH 8.8), 0.1 mL of a 10% SDS solution, 10 µL of TEMED and 50 µL of a 10% APS solution. The proteins, after running, were detected by the Coomassie Brilliant Blue R250-staining technique. Fig. 3 shows the separation patterns thus obtained. As a result, it was found that the ability of the 6% by mass schizophyllan gel prepared in this example to isolate proteins each having a molecular weight ranging from 75 to 250 kDa was almost identical to that observed for the 5% by mass polyacrylamide gel prepared in the comparative example.

Example 6: Native Disc Electrophoresis of Proteins

A native disc gel for electrophoresis having a glucan concentration of 2.5% by mass was prepared from the single-stranded schizophyllan having a molecular weight of about 2,000,000 prepared in Example 1 by the same procedures used in the section 1-3 of Example 2. This disc gel was fitted to a disc gel electrophoresis device, a running buffer (25mM Tris, 192mM glycine, pH 8.3) was introduced into the upper and lower baths of the device and then IgM (HUMAN IgM available from Chemicon International Inc.), $\alpha$ 2-macroglobulin (available from Wako Pure Chemical Industries, Ltd.), and a molecular weight marker (HMW Marker Kit (for Native-PAGE) available from Amersham Pharmacia Biotech.) were run at a constant current of 2 mA per one disc gel till a marker dye BPB moved up to a position about 5 mm apart from the bottom edge of the gel.

By way of comparative example, the same electrophoresis carried out above was likewise conducted using a 5% polyacrylamide disc gel prepared from 5.73 mL of deionized water, 1.67 mL of a 30% acrylamide solution, 2.5 mL of a 1.5M Tris-HCl buffer solution (pH 8.8), 10 $\mu$ L of TEMED and 50 $\mu$ L of a 10% APS solution. The proteins were detected by the Coomassie Brilliant Blue R250-staining technique. Fig. 4 shows the separation patterns thus obtained. IgM having a molecular weight ranging from 900 to 1,000 kDa never migrated on the comparative 5% by mass polyacrylamide gel and remained at a position in the proximity to the starting point, while the IgM migrated on the schizophyllan gel of this Example and the mobility thereof relative to BPB was found to be 0.07. Moreover, the mobilities of $\alpha$ 2-macroglobulin having a molecular weight of 720 kDa relative to BPB were found to be 0.14 for the 5% by mass polyacrylamide gel and 0.58 for the schizophyllan gel or the latter was found to be higher than the former. It has been known that the polyacrylamide concentration of at least 4 to 5% by mass is required for the preparation of a gel having a strength sufficient for use as a support for electrophoresis. Accordingly, it would be quite difficult to prepare a polyacrylamide gel for electrophoresis which allows the achievement of protein mobility higher than that observed for the gel of this comparative example. In other words, it was found that the schizophyllan gel of Example showed the migration of the protein through electrophoresis greater than that observed using the 5% by mass acrylamide gel. The foregoing would suggest that the gel of the present invention can be used for the analysis of proteins having molecular weights falling within a wider range and that the former be suitably used, in particular, in the separation of high molecular proteins which are separated by the polyacrylamide gel only with considerably difficultly.

Example 7: Slab Gel Electrophoresis of Proteins

A slab gel (150mm $\times$ 100mm $\times$ 3mm) having a glucan concentration of 3% by mass was prepared from the single-stranded scleroglucan having a molecular weight of about 2,000,000 prepared in the section B in Example 1 using the same procedures as set forth in the section 2 of Example 2. Subsequently, electrophoresis was carried out by the procedures similar to those used in Example 3. As a result, it was confirmed that the resulting gel showed a clear isolation pattern similar to that observed for the schizophyllan gel.

Example 8: Slab Gel Electrophoresis of DNA

A slab gel (150mm $\times$ 100mm $\times$ 3mm) having a glucan concentration of 5% by mass was prepared from the triple-stranded schizophyllan (1.5 g) having a helical structure (molecular weight thereof as the triple-strand: about 2,500,000) by the same procedures used in the section 2 in Example 2. The resulting gel was then immersed in a 1$\times$TAE running buffer (0.04M Tris, 0.04M glacial acetic acid, 0.001M EDTA) overnight to thus equilibrate the gel. Then two kinds of DNA molecular weight markers (Smart Ladder and pBR322/Msp I digest available from Nippon Gene Co., Ltd.) were subjected to electrophoresis at a constant voltage of 50 V till a marker dye BPB moved up to about 2/3 of the gel length.

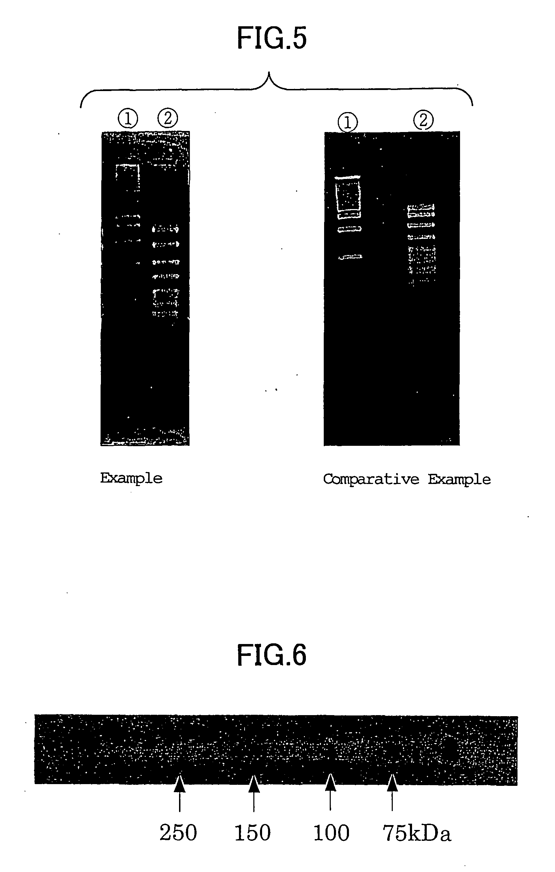

The same electrophoresis procedures used above were repeated using 3% by mass agarose (Agarose 21 available from Nippon Gene Co., Ltd.) gel as a comparative example. The gel obtained after the electrophoresis was stained with ethidium bromide and the DNA separation patterns were observed using Transilluminator. The results thus obtained are plotted on Fig. 5. The data shown in Fig. 5 indicate that the width between bands observed using the gel of Example is wider than that observed for the gel of Comparative Example and this clearly indicates that the gel of Example is superior in the resolution to the comparative gel.

Example 9: Recovery of Proteins Through Ultrasonic Application

A denaturing disc gel for electrophoresis having a glucan concentration of 6% by mass was prepared from the single-stranded schizophyllan having a molecular weight of about 150,000 prepared in Example 1 by the same procedures used in the section 1-2 of Example 2. Then human serum albumin (available from Wako Pure Chemical Industries, Ltd.) was subjected to electrophoresis using the disc gel by the same procedures used in Example 5. The gel obtained after the electrophoresis was immersed in a fixing solution (acetic acid: methanol: water = 5:20:75) overnight, introduced into a 10 mL volume bottle provided with a screwed type opening and then crushed therein with a spatula. To the crushed gel, there was added 5 mL of water, followed by the ultrasonication of the mixture over 60 minutes, the incubation at 4°C overnight and then the filtration (filter pore size: 0.80 μm) of the resulting liquid. The resulting filtrate was used as a recovered protein solution. Then the protein concentration of the recovered protein solution was determined using DC Protein Assay Kit II (available from BIO RAD) to thus determine the rate of protein recovery according to the following relation: the rate of protein recovery = (the amount of recovered protein/the amount of protein subjected to electrophoresis) $\times$ 100. In this respect, the rate of protein recovery was likewise determined when the gel obtained after the electrophoresis was directly processed without any immersion of the same in a fixing solution.

Human serum albumin was likewise subjected to electrophoresis using a 5% by mass polyacrylamide disc gel prepared from 5.73 mL of deionized water, 1.67 mL of a 30% acrylamide solution, 2.5 mL of 1.5M Tris-HCl buffer (pH 8.8), 0.1mL of a 10% SDS solution, 10 μL of TEMED and 50 μL of a 10% APS solution by the same method used above in this Example, as a comparative example and the rate of protein recovery was determined. The results thus obtained are listed in the following Table 6. In either of cases wherein the gels after the electrophoresis were subjected to a fixing treatment or free of any fixing treatment, the rates of protein recovery observed for the gels of the present invention were found to be higher than those observed for the gels of Comparative Example.

Table 6:

| Rate of Protein Recovery Through Ultrasonic Application Technique | | |
|---|---|---|
| | Fixing Treatment | Rate of Protein Recovery (%) |
| Ex. | Subjected to such a treatment | 41 |
| | Free of any such treatment | 49 |
| Comp. Ex. | Subjected to such a treatment | 28 |
| | Free of any such treatment | 32 |

Example 10: Recovery of Proteins Through Dissolution Technique

Two denaturing disc gels for electrophoresis, each having a glucan concentration of 6% by mass, were prepared from the single-stranded schizophyllan having a molecular weight of about 150,000 prepared in Example 1 by the same procedures used in the section 1-2 of Example 2. Then human serum albumin (available from Wako Pure Chemical Industries, Ltd.) was subjected to electrophoresis using each of these disc gels by the same procedures used in Example 5. Each gel obtained after the electrophoresis was introduced into a 10 mL volume bottle provided with a screwed type opening and then crushed therein with a spatula. To each crushed gel, there was added 5 mL of a 0.2N NaOH solution containing 1% SDS, or 5 mL of a 9M urea solution containing 1% SDS. The mixture was heated to 80°C till the gel was dissolved in the solvent and the resulting solution was used as a recovered, dissolved protein solution. Subsequently, the content of protein present in the recovered, dissolved protein solution was determined to thus calculate the rate of protein recovery by the same procedures used in Example 9.

Human serum albumin was likewise subjected to electrophoresis using a 5% by mass polyacrylamide disc gel prepared from 5.73 mL of deionized water, 1.67 mL of a 30% acrylamide solution, 2.5 mL of 1.5M Tris-HCl Buffer (pH 8.8), 0.1mL of a 10% SDS solution, 10 μL of TEMED and 50 μL of a 10% APS solution by the same method used above in this Example, as a comparative example and the rate of protein recovery was determined. The results thus obtained are listed in the following Table 7. In either of cases which made use of the NaOH solution and the urea solution as dissolving solutions, the rates of protein recovery observed for the gels of the present invention were found to be higher than those observed for the gels of Comparative Example.

Table 7:

| Rate of Protein Recovery Through Dissolution Technique | | |
|---|---|---|
| | Dissolving Solution | Rate of Protein Recovery (%) |
| Ex. | NaOH solution | 51 |
| | Urea solution | 35 |
| Comp. Ex. | NaOH solution | 6 |
| | Urea solution | 17 |

Example 11: Recovery of Proteins Through Freeze-Thawing Technique

A denaturing disc gel for electrophoresis having a glucan concentration of 6% by mass was prepared from the single-stranded schizophyllan having a molecular weight of about 150,000 prepared in Example 1 by the same procedures used in the section 1-2 of Example 2. Then human serum albumin (available from Wako Pure Chemical Industries, Ltd.) was subjected to electrophoresis using the disc gel by the same procedures used in Example 5. The gel obtained after the electrophoresis was introduced into a 10 mL volume bottle provided with a screwed type opening and then crushed therein with a spatula. To the crushed gel, there was added 1 mL of water, followed by maintaining the same in the frozen condition at - 20°C overnight and then thawed at 30°C. The molten liquid was filtered (pore size of filter: 0.80 μm) and the resulting filtrate was used as a recovered protein solution. Subsequently, the content of protein present in the recovered protein solution was determined to thus calculate the rate of protein recovery by the same procedures used in Example 9.

By way of comparative example, human serum albumin was likewise subjected to electrophoresis using a 5% by mass polyacrylamide disc gel prepared from 5.73 mL of deionized water, 1.67 mL of a 30% acrylamide solution, 2.5 mL of 1.5M Tris-HCl Buffer (pH 8.8), 0.1mL of a 10% SDS solution, 10 μL of TEMED and 50 μL of a 10% APS solution and the rate of protein recovery was determined by the same methods used above in this Example. The results thus obtained are listed in the following Table 8. As a result, it was found that the rate of protein recovery observed for the gel of the present invention was found to be considerably higher than that observed for the gel of Comparative Example.

Table 8:

| Rate of Protein Recovery Through Freeze-Thawing Technique | |
|---|---|
| | Rate of Protein Recovery (%) |
| Example | 85 |
| Comparative Example | 19 |

Example 12: Denaturing Disc Gel Electrophoresis of Proteins using Mixed gel Prepared from Single-stranded Schizophyllan and Neutral Polysaccharide

The following components were subjected to a homogenization treatment, together with 11.1 mL of deionized water and 3.75 mL of 1.5M Tris-HCl Buffer (pH 8.8): single-stranded schizophyllan (0.9 g) having a molecular weight of about 150,000 prepared in Example 1 and 0.075 g of dextran (having an average molecular weight of 11,000, available from SIGMA-ALDRICH), 0.075 g of starch (available from Wako Pure Chemical Industries, Ltd.) or 0.075 g of locust bean gum (available from Taito Co., Ltd.). Then the homogenized mixture was deaerated under a reduced pressure, followed by the addition of 0.15 mL of a 10% SDS aqueous solution and the subsequent stirring to thus give a mixed suspension containing the single-stranded schizophyllan and the neutral polysaccharide. Subsequently, a disc gel (diameter × length = 5mm × 85mm) for denaturing electrophoresis was prepared from each corresponding mixed suspension by the same method used in the section 1-2 of Example 2 and protein molecular weight markers were subjected to electrophoresis by the same procedures used in Example 5. As a result, it was confirmed that all of the gels prepared using neutral polysaccharides in combination with schizophyllan showed protein-resolution identical to that observed for the gel simply comprising schizophyllan prepared in Example 5, although they differ from one another in the mobilities of proteins. Fig. 6 shows the separation pattern of proteins observed for the gel prepared using starch.

Example 13: Improvement of Resolution of Low Purity Agarose

To 1 × TAE running buffer, there were added 0.6% by mass of single-stranded schizophyllan having a molecular weight of about 150,000 and 1% by mass of low purity agarose (available from Taito Co., Ltd.), these substances were dissolved with heating, the resulting solution was transferred to a gel tray (70mm × 85mm) of a submarine type small-sized electrophoresis device and then cooled to give a gel. Then a DNA molecular weight marker (Smart Ladder available from Nippon Gene Co., Ltd.) was subjected to electrophoresis at a constant voltage of 50 V till a marker dye BPB moved up to about 2/3 of the gel length.

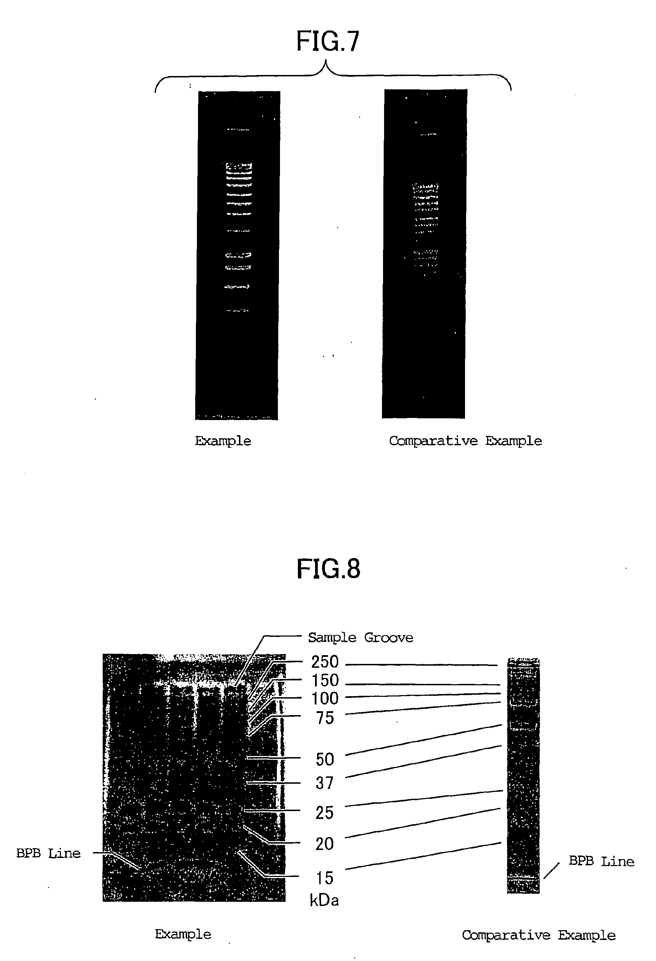

The same procedures for electrophoresis used above were repeated using a low purity agarose gel of 1% by mass as a comparative example. The gels Example and Comparative Example obtained after the electrophoresis were stained with ethidium bromide and the DNA separation patterns were observed using Transilluminator. The separation patterns obtained in Example and Comparative Example are plotted on Fig. 7. Thus it was confirmed that the protein-resolution of the gel of the present invention is clearly higher than that observed for the gel of Comparative Example.

Example 14: Slab Gel Electrophoresis of Proteins Using Neutral Gel as a Support

A slab gel (70mm × 85mm × 3mm) having a glucan concentration of 6% by mass was prepared from schizophyllan having a molecular weight as a triple-strand of about 450,000 by the same procedures used in the section 1-4 of Example 2. This gel was dialyzed against deionized water over 2 days and then immersed in a gel buffer (ion-exchanged water/1.5M Tris-HCl Buffer (pH 8.8)/10% SDS solution = 111: 37.5: 1.5 (v/v)) for 2 days to equilibrate the gel with the buffer. Subsequently, the equilibrated gel was transferred to a gel tray of a submarine type small-sized electrophoresis device and then a protein molecular weight marker (BIO RAD, Precision Standard, Molecular Weight Range: 10-250 kDa) was run at a constant current of 40 mA till a marker dye BPB moved up to a position about 5 mm apart from the edge of the gel.

The proteins, after running, were detected by the Coomassie Brilliant Blue R250-staining technique. It was thus found that proteins having molecular weight falling within the range of from 250 to 37 kDa could be separated by the electrophoresis using a gel prepared by the gel-forming method through neutralization as a support.

Example 15: Preparation of Slab Gel Using Formamide

Triple-stranded schizophyllan (0.8 g) having a helical structure (molecular weight thereof as the triple-strand: about 450,000) was dissolved in 10 mL of a 0.5N-NaOH solution at room temperature with stirring. The resulting solution was deaerated under a reduced pressure and then 0.182 mL of formamide was added to the solution with sufficient stirring. Subsequently, this dispersion was introduced into a gel-forming device, followed by allowing the same to stand over two nights to convert the same into a gel and to thus form a slab gel (60mm × 52mm × 4mm) for electrophoresis.

Example 16: Slab Gel Electrophoresis of Proteins

A slab gel (60 mm × 52 mm × 4 mm) having a glucan concentration of 8% by mass was prepared by repeating the same procedures used in Example 15. The resulting gel was immersed in ion exchanged water in an amount of 40 times the volume of the gel (one hour × two times), then immersed in 10 volumes of a gel buffer (ion-exchanged water/1.5M Tris-HCl Buffer (pH 8.8)/10% SDS solution = 111: 37.5: 1.5 (v/v)) for a night to equilibrate the gel with the buffer. Subsequently, the equilibrated gel was transferred to a gel tray of a submarine type small-sized electrophoresis device filled with a running buffer (25mM Tris, 192mM glycine, 0.1% SDS solution, pH 8.8), a protein molecular weight marker (BIO RAD, Precision Plus Standard, Molecular Weight Range: 10-250 kDa) was put on a sample well of the gel and then run at a constant voltage of 100 V till a marker dye BPB moved up to a position about 5 mm apart from the tip of the gel.

The same procedures for electrophoresis used above were repeated using a 12% polyacrylamide gel as a comparative example. The proteins, after running, were detected by the Coomassie Brilliant Blue R250-staining technique. Fig. 8 shows the separation patterns observed in Example 16 and its comparative example. The gel of Example 16 showed a protein-resolution almost comparable to that observed for the 12% polyacrylamide gel of the comparative example.

Example 17: Recovery of Protein 1 by Enzymatic Method

Preparation of Biotin-Labeled β-1,3-Glucanase

Zymolase (50 mg, available from Seikagaku Corporation) was subjected to gel filtration chromatography treatment (Sephadex G100, 25φ × 400) to thus give about 10 mg of purified β-1,3-glucanase. The purified β-1,3-glucanase was then labeled with biotin using Biotin-Labeling Kit (available from DOJIN Chemical Co., Ltd.).

Recovery of Proteins

A denaturing disc gel for electrophoresis having a glucan concentration of 6% by mass was prepared from single-stranded schizophyllan prepared in Example 1 and having a molecular weight of about 150,000, by repeating the same procedures used in the section 1-2 of Example 2. Then human serum albumin (available from Wako Pure Chemical Industries, Ltd.) was subjected to electrophoresis using the disc gel by repeating the same procedures used in Example 5. The gel obtained after the electrophoresis was introduced into a 10 mL volume bottle provided with a screwed type opening and then crushed therein with a spatula. The crushed gel was added to 1 mL of the foregoing biotin-labeled β-1,3-glucanase solution and then allowed to stand at about 37°C overnight. The enzymatic reaction solution was dialyzed through a dialysis membrane having an exclusion molecular weight of 10,000 against a phosphate buffer solution, then the liquid remaining in the membrane was subjected to the treatment with an avidin-immobilized column (PIERCE) and then eluted with an elution buffer: ImmunoPure (registered trademark). The resulting elute was used as a recovered protein solution. Subsequently, the content of protein present in the recovered protein solution was determined to thus calculate the rate of protein recovery by the same procedures used in Example 9. The rate of protein recovery was thus found to be 90%.

Example 18: Recovery of Protein 2 by Enzymatic Method

Preparation of I:mmobilized Enzyme

About 5 mL of Aminocellulofine (available from Seikagaku Corporation) was washed with pure water, suspended in 5 mL of a 2.5% glutaraldehyde solution, the resulting suspension was then stirred under a reduced pressure for about one hour. The suspension was washed with pure water and then with 50mM phosphate buffer (pH 7.4), 5 mL of the foregoing purified β-1,3-glucanase solution (0.1 mg/mL) and then allowed to stand all day and night at room temperature. The product was sufficiently washed with 50mM phosphate buffer to thus give immobilized enzyme.

Recovery of Proteins

A disc gel for denaturing electrophoresis having a glucan concentration of 6% by mass was prepared from the single-stranded schizophyllan having a molecular weight of about 150,000 prepared in Example 1 by the same procedures used in the section 1-2 of Example 2. Then human serum albumin (available from Wako Pure Chemical Industries, Ltd.) was subjected to electrophoresis using the disc gel by the same procedures used in Example 5. The gel obtained after the electrophoresis was introduced into a 10 mL volume bottle provided with a screwed type opening and then crushed therein with a spatula. To the crushed gel, there was added 1 mL of water, followed by the addition of 20 mg of the foregoing immobilized enzyme and then allowing it to stand at about 37 °C overnight. The enzymatic reaction solution was dialyzed through a dialysis membrane having an exclusion molecular weight of 10,000 against a phosphate buffer solution and the liquid remaining in the membrane was used as a recovered protein solution. Subsequently, the content of protein present in the recovered protein solution was determined to thus calculate the rate of protein recovery by the same procedures used in Example 9. The rate of protein recovery was thus found to be 87%.

Example 19: Preparation of Gel Having High Glucan Concentration

To 3.5 g of triple-stranded schizophyllan having a helical structure (molecular weight thereof as the triple-strand: about 450,000), there was added a 0.5M NaOH solution to a total mass of 25 g (concentration of 14% by mass). After the mixture was sufficiently stirred till the air bubbles present therein were completely removed, 0.455 mL of formamide (one equivalent with respect to NaOH) was then added thereto, followed by stirring the same till a uniform mixture was obtained and the subsequent introduction thereof into a gel-forming device. After converting it into a gel by allowing it to stand at room temperature over two nights, the resulting gel was subjected to substitution by immersion thereof in ion-exchanged water, a gel buffer (ion-exchanged water/1.5M Tris-HCl Buffer (pH 8.8)/10% SDS solution = 111: 37.5: 1.5 (v/v)) to thus give a support for electrophoresis.

Example 20: Electrophoresis of Low Molecular Weight Polypeptide

A slab gel (70mm × 85mm × 3mm) having a glucan concentration of 14% by mass was prepared by the same procedures used in Example 19. The resulting gel was immersed in ion exchanged water in an amount of 40 times the volume of the gel (one hour × two times), then immersed in 10 volumes of a gel buffer (ion-exchanged water/ 1.5M Tris-HCl Buffer (pH 8.8)/10% SDS solution = 111: 37.5: 1.5 (v/v)) for a night to equilibrate the gel with the buffer. Subsequently, the equilibrated gel was transferred to a gel tray of a submarine type small-sized electrophoresis device filled with a running buffer (25mM Tris, 192mM tricine, 0.1% SDS solution, pH 8.8), Carade Scope Polypeptide Standard (available from BIO RAD, Molecular Weight Range: 4-34.5 kDa) was put on a sample well of the gel and then run at a constant voltage of 100 V till a marker dye BPB moved up to a position about 5 mm apart from the tip of the gel.
The same procedures for electrophoresis used above were repeated using a 17% polyacrylamide gel as a comparative example.

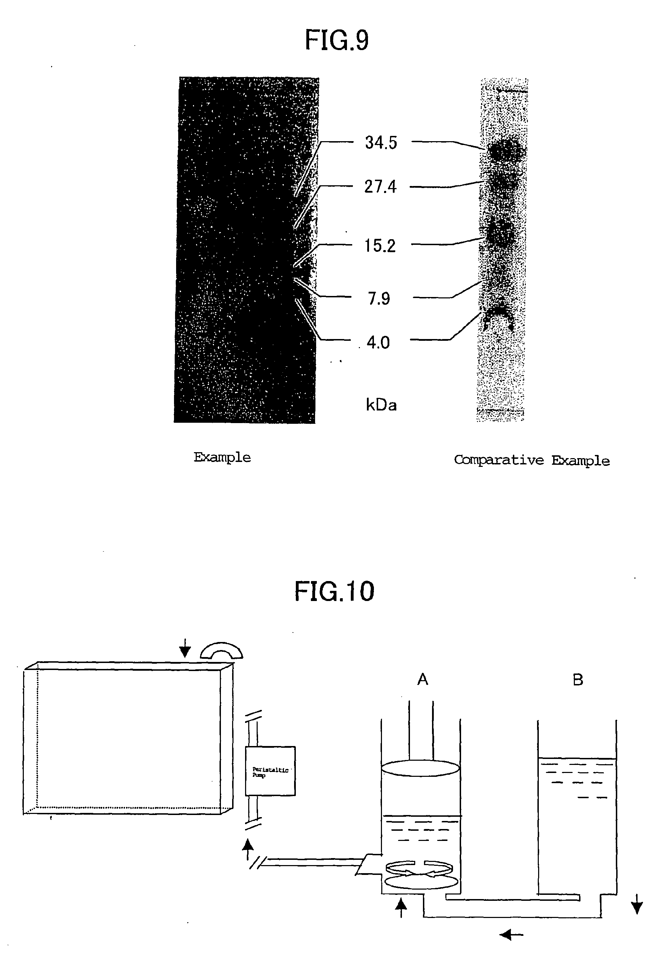

Fig. 9 shows the separation patterns observed in Example 20 and its comparative example. The gel of Example 20 showed a protein-resolution almost comparable to that observed for the 17% polyacrylamide gel of the comparative example.

Example 21: Electrophoresis Using Gel Having Concentration Gradient

Alkaline solutions having glucan concentrations of 6% and 14%, respectively were prepared by repeating the same procedures used in Example 15, followed by the addition, to each solution, of an equivalent amount of formamide with respect to sodium hydroxide and subsequent satisfactory stirring. Each solution having each corresponding glucan concentration was introduced into a gradient gel-forming device (Fig. 10). The solution having a higher glucan concentration was introduced into the tank A in Fig. 10, while that having a lower glucan concentration was introduced into the tank B. After the upper portion of the tank A was confined by a stopper, the glucan solutions were gently introduced into a gel-forming device by the action of a peristaltic pump while stirring the solution in the tank A to thus prepare a slab gel having a concentration gradient ranging from 6 to 14%.

Example 22: Concentration Gradient Slab Gel Electrophoresis of Proteins

A slab gel (70mm × 85mm × 3mm) having a glucan concentration gradient ranging from 6 to 14% was prepared by repeating the same procedures used in Example 21. Then a protein molecular weight marker (BIO RAD, Precision Plus Protein Standard, molecular weight range: 10-250 kDa) was run using this gel, as in Example 15.
The proteins, after running, were detected by the Coomassie Brilliant Blue R250-staining technique.
By way of comparative example, the separation pattern observed for 4-20% polyacrylamide gel (picked up from the manual attached to Precision Plus Protein Standard available from BIO RAD Company) was described.

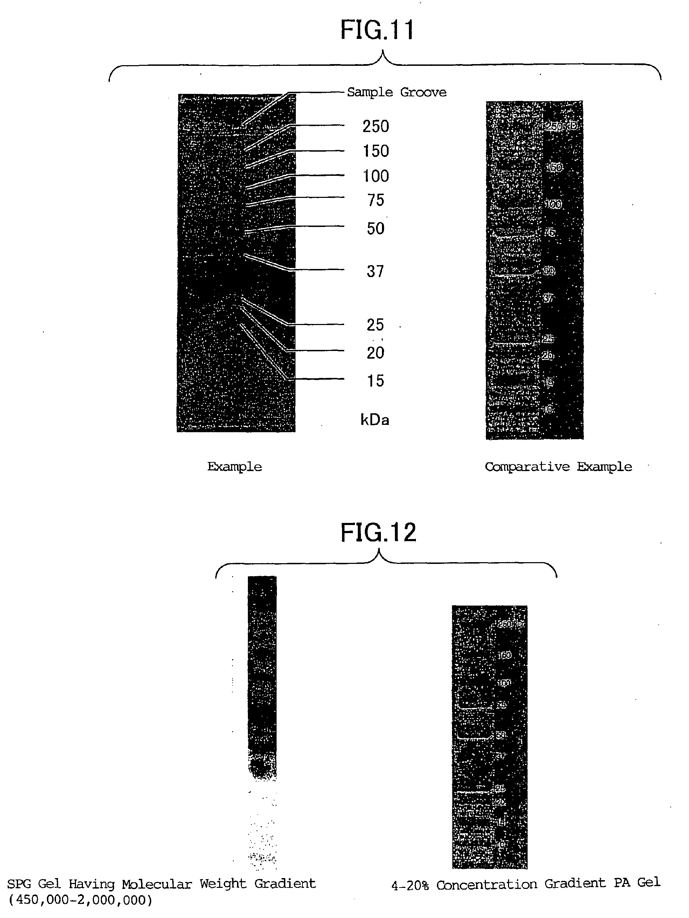

Fig. 11 shows the separation patterns observed in Example 22 and its comparative example. The gel of Example 22 having a glucan concentration gradient ranging from 6 to 14% showed a protein-resolution almost comparable to that observed for the 4-20% polyacrylamide gel of the comparative example.

Example 23: Preparation of Glucan Gel Having Molecular Weight Gradient

A 0.5M NaOH solution was added to 2.1 g of schizophyllan having a molecular weight as a triple-strand of 450,000 to a total mass of 15 g (14% (w/w)), while a 0.5M NaOH solution was added to 1.2 g of schizophyllan having a molecular weight as a triple-strand of 2,000,000 to a total mass of 20 g (6% (w/w)), followed by sufficient stirring of these solutions till any air bubble present therein was completely removed, the addition of 0.273 mL and 0.364 mL of formamide (equivalent amounts with respect to NaOH) to these solutions respectively and subsequent stirring till uniform solutions could be obtained.
The solution containing 14% glucan (schizophyllan having a molecular weight of 450,000) was introduced into the tank A of the gel-forming device as shown in Fig. 10, while the solution containing 6% glucan (schizophyllan having a molecular weight of 2,000,000) was introduced into the tank B thereof. After the upper portion of the tank A was confined by a stopper, the glucan solutions were gently introduced into the gel-forming device by the action of a peristaltic pump while stirring the solution in the tank A. The solution in the gel-forming device was allowed to stand at room temperature for two nights to thus get the same gelled and the resulting gel was subjected to substitution by immersion thereof in ion-exchanged water and then a gel buffer (111 mL of ion-exchanged water, 37.5 mL of 1.5M Tris-HCl Buffer (pH 8.8) and 1.5 mL of a 10% SDS solution) to thus give a support for electrophoresis.
The electrophoresis was carried out at a constant voltage of 100 V according to the Laemmli technique (U. K. Laemmli, Nature, 1970, 227:680) after the application of 10 μl of the sample.
Fig. 12 shows the separation pattern observed for 45-2,000,000 molecular weight gradient glucan gel. As a result, it was confirmed that proteins of 15-250 kDa could be separated by the gel although the separation ability thereof for the proteins of 75-250 kDa was poor as compared with the PA (polyacrylamide) gradient gel.

Example 24: Preparation of Slab Gel Using Formamide-Gel-Preparation Method Through Heating

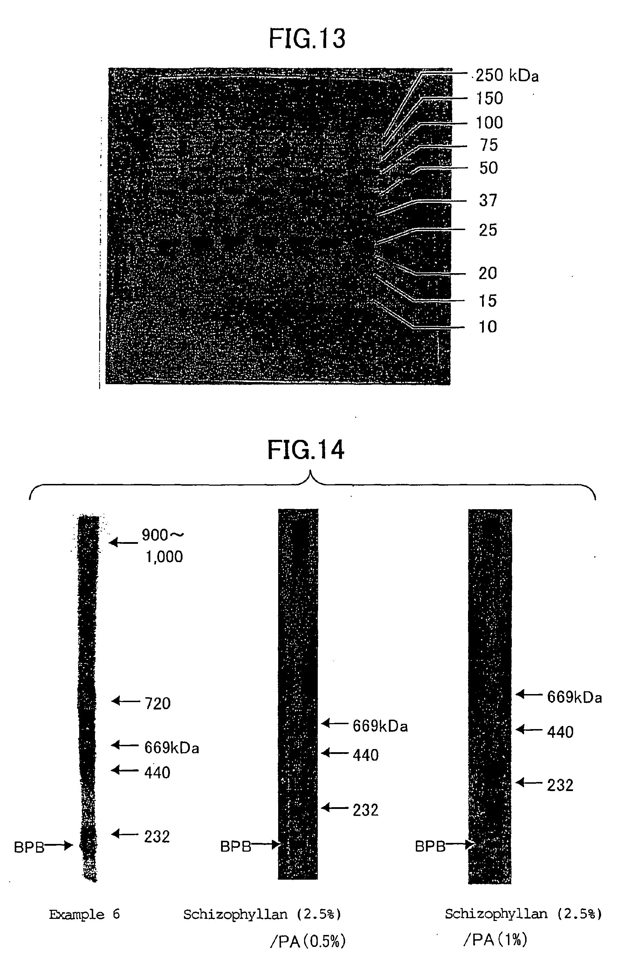

Triple-stranded schizophyllan (1.0 g) having a helical structure (molecular weight thereof as the triple-strand: about 450,000) was dissolved in 10 mL of a 0.5N-NaOH solution at room temperature with stirring. After the solution was sufficiently deaerated under a reduced pressure, 0.182 mL of formamide was then added thereto, followed by the sufficient stirring of the resulting mixture. Subsequently, the mixture was introduced into a gel-forming device followed by allowing the same to stand over two nights to thus get the mixture gelled. Thereafter, the mixture was heat-treated at 80°C for 30 minutes while maintaining it in the gel-forming device to thus form a slab gel (60mm × 52mm × 4mm) for electrophoresis. Then a protein molecular weight marker (BIO RAD, Precision Standard, molecular weight range: 10-250 kDa) was run using this gel, as in Example 16. The results thus obtained are plotted on Fig. 13.

Example 25: Preparation of Schizophyllan/Polyacrylamide (PA) Mixed Gel

There were admixed together 1.5M Tris-HCl Buffer (pH 8.8), deionized water, and single-stranded schizophyllan (molecular weight thereof as its triple-strand: about 6,000,000) (prepared in Example 1) in a mixing ratio as set forth in the following Table 9 and the resulting mixture was stirred overnight using a stirrer to thus dissolve the schizophyllan. To the resulting solution, there were added a 30% acrylamide solution (acrylamide/N,N'-methylene-bis-acrylamide = 37.5/1), 50 μL of a 10% ammonium persulfate and 10 μL of TEMED (N,N,N',N'-tetramethyl-ethylene-diamine) followed by the stirring of the mixture. After the deaeration of the mixture for 10 minutes, the solution was introduced into a glass tube (diameter × length = 5mm × 100mm), heated to 120°C for 20 minutes to induce gelation and to thus form a native disc gel mixed schizophyllan/polyacrylamide (PA) (diameter × length = 5mm × 85mm) for electrophoresis.

Table 9

| Schizophyllan Concn. | PA Concn. | Deionized water | 30% Acrylamide solution | 1.5M Tris- HCl Buffer (pH 8.8) | Schizophyllan (single-strand) |
|---|---|---|---|---|---|
| 2.5% | 0.5% | 7.08 mL | 0.17 mL | 2.5 mL | 0.25 g |
| 2.5% | 1.0% | 6.92 mL | 0.33 mL | 2.5 mL | 0.25 g |

A molecular weight marker (HMW Marker Kit (for Native-PAGE) available from Amersham Pharmacia Biotech.) was subjected to electrophoresis by repeating the same procedures used in Example 6, using the native disc gel mixed schizophyllan/ polyacrylamide (PA) for electrophoresis thus prepared. The resulting separation pattern is shown in Fig. 14 together with the separation pattern obtained in Example 6. The data indicate that, in the gel of Example 6, the substances having molecular weights of 669 kDa and 440 kDa caused the tailing of bands, while the resolution of the schizophyllan/PA mixed gel of Example 25 is improved.

Example 26: Preparation of Schizophyllan Xerogel for Isoelectric Focusing

Triple-stranded schizophyllan (1.6 g) having a helical structure (molecular weight thereof as the triple-strand: about 6,000,000) was dissolved in 40 mL of a 0.5N-NaOH solution at room temperature with stirring. After the addition of 0.96 mL of formamide to the solution and sufficient stirring of the same, the resulting mixture was deaerated under a reduced pressure. Then, this solution was introduced into a gel-forming device (200mm × 200mm × 1mm) comprising a glass plate (plane) and a glass plate (notch, provided with a spacer having a thickness of 1 mm) and carrying a hydrophilic film (FMC BioProducts, Gel Bond Film) adhered to the plane side of the glass plate and then converted into a gel over two nights. After heating the gel-forming device at 80°C for 15 minutes, a slab gel adhered to the film was removed from the gel-forming device. The gel was dried at room temperature on the film all day and night, followed by repeating three times the operation wherein the gel was swollen with deionized water to thus remove neutralization impurities present in the gel and the subsequent treatment in an autoclave at 120°C for 15 minutes while the gel was still in the swollen condition. Finally, the gel was immersed in a 10% aqueous glycerin solution for one hour, then dried overnight and a hydrophobic film (FMC BioProducts, Gel Bond Film) was adhered to the resulting gel to thus form a schizophyllan xerogel for isoelectric focusing having a three layer-structure comprising a hydrophilic film, schizophyllan gel and a hydrophobic film.

Example 27: Isoelectric Focusing Using Schizophyllan Xerogel

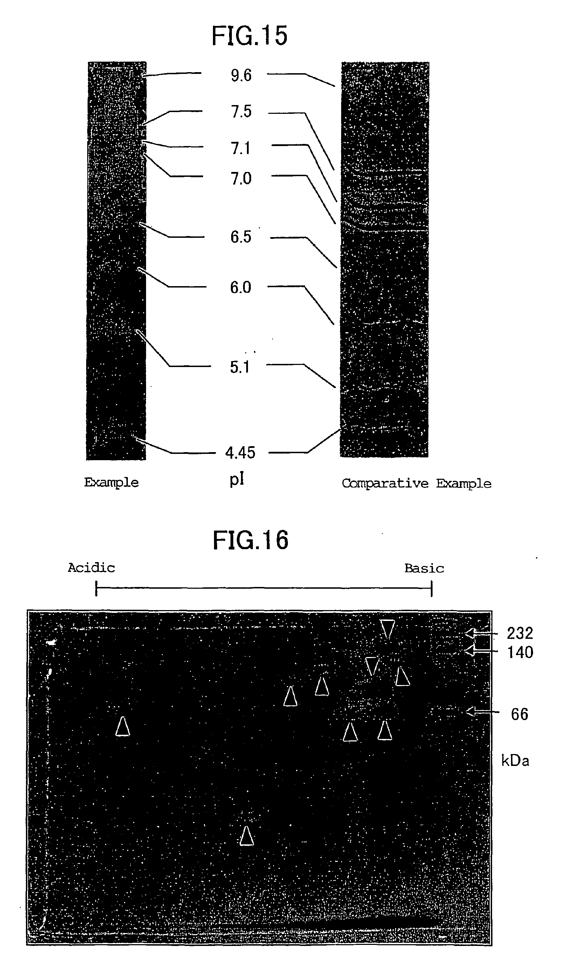

A schizophyllan xerogel (70mm × 50mm × 1mm) for isoelectric focusing, having a glucan concentration of 4% by mass was prepared by repeating the same procedures used in Example 26. The resulting gel was swollen overnight in 5 mL of a swelling liquid (250 μL of Biolight 3/10 (BIO RAD), 62.5 μL of Biolight 5/7 (BIO RAD), 125 μL of 0.1% (w/v) Orange G (available from Wako Pure Chemical Industries, Ltd.), whose volume had been increased with ion-exchanged water to a total volume of 5 mL). After the completion of the swelling, COOL FORESTER IPG-IEF Type-P (available from Anatech Co., Ltd.) was used for carrying out the isoelectric focusing. A sample (BIO RAD, IEF Standards) (5 μL) was put on filter paper for sample and the filter paper was applied to the anode side of the slab gel. Filter paper for electrodes were immersed in distilled water and placed on both sides of the gel so that they came in close contact with one another. Then electrodes were put on the filter paper for electrodes and electrophoresis was carried out according to the following three voltage programs: 200 V-20 min; 500 V-30 min; and 800 V-10 min. The results thus obtained are shown in Fig. 15 along with those observed for a comparative example (a separation pattern observed for a polyacrylamide gel (picked up from the manual attached to the IEF Standards, BIO RAD).

Example 28: 2-Dimensional Electrophoresis Using Schizophyllan Xerogel

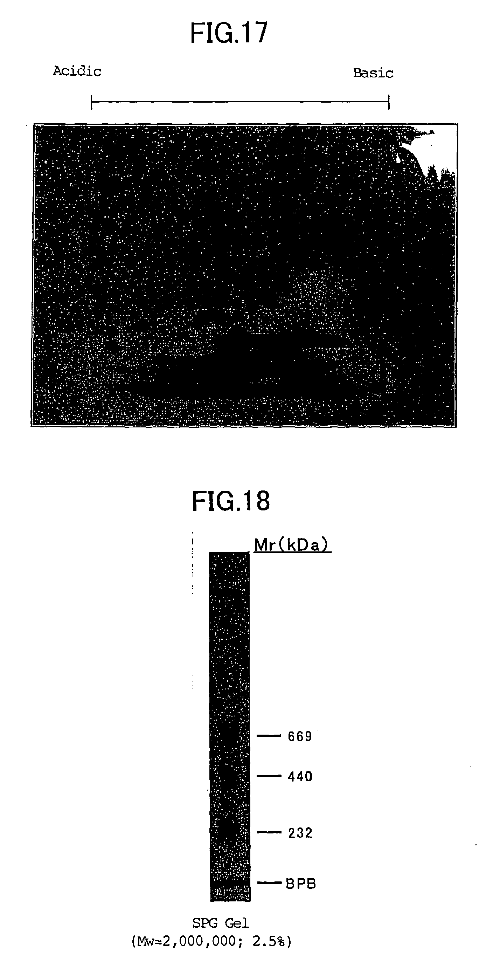

A schizophyllan xerogel for isoelectric focusing, having a glucan concentration of 4% by mass was prepared by repeating the same procedures used in Example 26 and the width of the resulting gel was set at a level of 3 mm (70 × 3 × 1 mm). The same procedures used in Example 27 were repeated to thus carry out the isoelectric focusing for the first dimension, followed by the immersion of the gel, after the electrophoresis for the first dimension, in the equilibration buffer or the SDS-containing treating liquid listed in the following Table 10 for 20 minutes for the equilibration or the SDS- treatment. Thereafter, this gel was subjected to electrophoresis of native systems or electrophoresis of denaturing systems. The second dimensional electrophoresis was carried out by the same procedures used in Example 16 for the electrophoresis of denaturing systems and by those used in Example 16 except for omitting the addition of denaturing agent for the electrophoresis of native systems. The separation pattern observed for the electrophoresis of native systems was shown in Fig. 16, while the separation pattern observed for the electrophoresis of denaturing systems was shown in Fig. 17.

Table 10

| | Equilibration Buffer | SDS-Treating Liquid |
|---|---|---|
| 0.5M Tris-HCl Buffer, pH 6.8 | 3.13 mL | 3.13 mL |
| 10% SDS-Containing Treating Liquid | -- | 5.75 mL |
| 2-Mercapto-ethanol | -- | 1.25 mL |
| Glycerol | 2 mL | 2 mL |
| 0.05% BPB Solution | 625 μL | 625 μL |
| Purified Water | 19.25 mL | 12.25 mL |
| Total Amt. | 25 mL | 25 mL |

Example 29: Recovery of Proteins from Schizophyllan Gel

A slab gel (60mm × 52mm × 4mm) having a glucan concentration of 5% by mass was prepared from triple-stranded schizophyllan having a molecular weight of about 2,000,000 by repeating the procedures used in Example 15. After immersing the resulting gel in ion-exchanged water in an amount of 40 times the volume of the gel (one hour × 2 times), the gel was immersed in 10 volumes of a gel buffer (ion-exchanged water/1.5M Tris-HCl Buffer (pH 8.8) = 112.5: 37.5 (v/v)) overnight to thus equilibrate the gel with the gel buffer.

Then the equilibrated gel was transferred to the gel tray of a submarine type small-sized electrophoresis device filled with a running buffer (25mM Tris, 192mM glycine, pH 8.3) and peroxidase (product derived from horse radish, available from Wako Pure Chemical Industries, Ltd.) diluted three times with a sample buffer (purified water/0.5M Tris-HCl Buffer (pH 6.8)/glycerol/0.5% (w/v) Bromophenol Blue) was subjected to electrophoresis at a constant voltage of 100 V till a marker dye BPB moved up to a position about 5 mm apart from the bottom edge of the gel. Subsequently, the peroxidase band which had been confirmed by the preliminary electrophoresis of the peroxidase carried out under the same conditions used above was cut out from the resulting gel, introduced into an Eppendorph tube, followed by the addition, to the gel, of 1 mL of a β-1,3-glucanase solution [10 mg of β-1,3-glucanase, 0.99 mL of 0.05M Tris-HCl Buffer (pH 6.8), 10 μ L of a protease-inhibitor cocktail (available from Sigma Company)] and the subsequent sufficient crushing of the gel with a spatula. The crushed gel was dissolved by the incubation thereof at 37°C for 2.5 hours, followed by the filtration thereof (the pore size of the filter used: 0.80 μ m) to give a filtrate, which was used as a recovered peroxidase solution. The recovery rate of peroxidase was found to be about 50%.

The recovery rate of peroxidase was determined on the basis of the measured value of the peroxidase activity according to the following relation:

Recovery Rate of Peroxidase (%) = (Activity of Recovered Peroxidase

Solution)/(Activity of Peroxidase Solution Subjected to Electrophoresis) × 100

Example 30: Electrophoresis Using Slab Gel for Vertical Electrophoresis Device

To 0.25 g of the single-stranded schizophyllan having a molecular weight of about 2,000,000 prepared in the section B of Example 1, there were added 2.5 mL of 1.5M Tris-HCl Buffer, pH 8.8, and 7.25 mL of deionized water and then the resulting mixture was homogenized together to thus give a suspension of single-stranded schizophyllan. After the suspension was deaerated under a reduced pressure, it was introduced into a device for forming, through heating, a gel for a vertical electrophoresis device, converted into a gel by heating the same at 120°C for 15 minutes to thus form a slab gel (85mm × 75mm × 1mm) having a glucan concentration of 2.5% for use in a vertical electrophoresis device. This gel was fitted to a vertical electrophoresis device, a running buffer (25mM Tris, 192mM glycine, 0.1% SDS solution, pH 8.3) was added to the device and a protein marker (HMW Marker Kit (for Native-PAGE) available from Amersham Pharmacia Biotech.) was run at a constant current of 20 mA till a marker dye BPB moved up to a position about 5 mm apart from the edge of the gel. The resulting separation pattern is shown in Fig. 18.

Example 31: Method for Preparing Double-Layer Gel of Polyacrylamide Gel and Schizophyllan Gel According to Gel-Forming Technique Through Heating

There were admixed together 5.8 mL of deionized water, 1.7 mL of a 30% acrylamide solution, 2.5 mL of 1.5M Tris-HCl Buffer (pH 8.8), 10 μ L of TEMED, and 50 μ L of a 10% APS solution, the resulting mixture was poured into a heating-gel-forming device up to the central level thereof and it was converted into a gel to give a 5% by mass polyacrylamide gel. Thereafter, to 0.25 g of the single-stranded schizophyllan having a molecular weight of about 2,000,000 prepared in the section B of Example 1, there were added 2.5 mL of 1.5M Tris-HCl Buffer, pH 8.8, and 7.25 mL of deionized water and then the resulting mixture was homogenized together to thus give a suspension of single-stranded schizophyllan. After the suspension was deaerated under a reduced pressure, it was poured onto the top of the polyacrylamide gel present in the heating-gel-forming device and then converted into a gel by heating the same at 120°C for 15 minutes. There was thus prepared a double-layer slab gel (85mm × 75mm × 1mm) for use in electrophoresis comprising polyacrylamide and schizophyllan gels.

Example 32: Method for Preparing Double-Layer Gel of Schizophyllan Gel and Agarose Gel According to Heating-Gel-Forming Technique

To 0.25 g of the single-stranded schizophyllan having a molecular weight of about 2,000,000 prepared in the section B of Example 1, there were added 2.5 mL of 1.5M Tris-HCl Buffer, pH 8.8, and 7.25 mL of deionized water and then the resulting mixture was homogenized together to thus give a suspension of single-stranded schizophyllan. After the suspension was deaerated under a reduced pressure, it was poured into a heating-gel-forming device up to the central level thereof and then converted into a gel by heating the same at 120°C for 15 minutes. Then a suspension comprising 0.1 g of agarose (Agarose LE available from Wako Pure Chemical Industries, Ltd.), 7.5 mL of deionized water and 2.5 mL of 1.5M Tris-HCl Buffer (pH 8.8) was heated to dissolve the agarose, then it was poured onto the top of the schizophyllan gel present in the heating-gel-forming device and then cooled to form a gel. There was thus prepared a double-layer slab gel (85mm × 75mm × 1mm) for use in electrophoresis comprising schizophyllan and agarose gels.

Example 33: Method for Preparing Three-Layer Gel of Polyacrylamide Gel, Schizophyllan Gel and Agarose Gel According to Heating-Gel-Forming Technique

There were admixed together 5.8 mL of deionized water, 1.7 mL of a 30% acrylamide solution, 2.5 mL of 1.5M Tris-HCl Buffer (pH 8.8), 10 μL of TEMED, and 50 μL of a 10% APS solution, the resulting mixture was introduced into a heating-gel-forming device up to one-third of the whole level thereof and converted into a gel to thus form a 5% by mass polyacrylamide gel. Then, to 0.25 g of the single-stranded schizophyllan having a molecular weight of about 2,000,000 prepared in the section B of Example 1, there were added 2.5 mL of 1.5M Tris-HCl Buffer, pH 8.8, and 7.25 mL of deionized water and then the resulting mixture was homogenized together to thus give a suspension of single-stranded schizophyllan. After the suspension was deaerated under a reduced pressure, it was poured onto the top of the polyacrylamide gel previously formed in the heating-gel-forming device up to two-thirds of the level thereof and then converted into a gel by heating the same at 120°C for 15 minutes. Finally, a suspension comprising 0.1 g of agarose (Agarose LE available from Wako Pure Chemical Industries, Ltd.), 7.5 mL of deionized water and 2.5 mL of 1.5M Tris-HCl Buffer (pH 8.8) was heated to dissolve the agarose, then it was poured onto the top of the schizophyllan gel in the heating-gel-forming device and then cooled to form a gel. There was thus prepared a three-layer slab gel (85mm × 75mm × 1mm) for use in electrophoresis comprising polyacrylamide, schizophyllan and agarose gels.

Example 34: Method for Preparing Double-Layer Gel of Polyacrylamide Gel and Schizophyllan Gel According to Neutralization-Gelation Technique

There were admixed together 8.3 mL of deionized water, 1.7 mL of a 30% acrylamide solution, 10 µL of TEMED, and 50 µL of a 10% APS solution, the resulting mixture was introduced into a gel-forming device up to the central level thereof and converted into a gel to thus form a 5% by mass polyacrylamide gel. Then triple-stranded schizophyllan (1.0 g) having a helical structure (molecular weight thereof as the triple-strand: about 450,000) was dissolved in 10 mL of a 0.5N NaOH solution at room temperature with stirring. After the solution was deaerated under a reduced pressure, 0.182 mL of formamide was then added thereto, followed by the sufficient stirring of the resulting mixture. Subsequently, the mixture was poured onto the top of the polyacrylamide gel in the gel-forming device and then converted into a gel by allowing it to stand over two nights. There was thus prepared a two-layer slab gel (75mm × 85mm × 2mm) for electrophoresis comprising polyacrylamide and schizophyllan gels.

Example 35: Method for Preparing Double-Layer Gel of Schizophyllan Gel and Agarose Gel According to Neutralization-Gelation Technique

Triple-stranded schizophyllan (1.0 g) having a helical structure (molecular weight thereof as the triple-strand: about 450,000) was dissolved in 10 mL of a 0.5N NaOH solution at room temperature with stirring. After the solution was deaerated under a reduced pressure, 0.182 mL of formamide was then added thereto, followed by sufficient stirring of the resulting mixture. Subsequently, it was poured into a gel-forming device up to the central level thereof and then converted into a gel by allowing the same to stand over two nights. Then a suspension comprising 0.1 g of agarose (Agarose LE available from Wako Pure Chemical Industries, Ltd.) and 10 mL of deionized water was heated to dissolve the agarose, then it was poured onto the top of the schizophyllan gel present in the heating-gel-forming device and then cooled to form a gel. There was thus prepared a double-layer slab gel (75mm × 85mm × 2mm) for electrophoresis comprising schizophyllan and agarose gels.

Example 36: Method for Preparing Three-Layer Gel of Polyacrylamide Gel, Schizophyllan Gel and Agarose Gel According to Neutralization-Gelation Technique

There were admixed together 8.3 mL of deionized water, 1.7 mL of a 30% acrylamide solution, 10 µL of TEMED, and 50 µL of a 10% APS solution, the resulting mixture was introduced into a gel-forming device up to one-third of the whole level thereof and converted into a gel to thus form a 5% by mass polyacrylamide gel. Then triple-stranded schizophyllan (1.0 g) having a helical structure (molecular weight thereof as the triple-strand: about 450,000) was dissolved in 10 mL of a 0.5N NaOH solution at room temperature with stirring. After the solution was deaerated under a reduced pressure, 0.182 mL of formamide was added thereto, followed by sufficient stirring of the resulting mixture. Subsequently, the mixture was poured onto the polyacrylamide gel in the gel-forming device up to two-thirds of the whole level thereof and converted into a gel by allowing the same to stand over two nights. Finally, a suspension comprising 0.1 g of agarose (Agarose LE available from Wako Pure Chemical Industries, Ltd.) and 10 mL of deionized water was heated to dissolve the agarose, then it was poured onto the top of the schizophyllan gel in the gel-forming device and then cooled to form a gel. There was thus prepared a three-layer slab gel (75mm × 85mm × 2mm) for electrophoresis comprising polyacrylamide, schizophyllan and agarose gels.

**Industrial Applicability**

The novel gel for electrophoresis according to the present invention can be applied to the isolation and analysis of nucleic acids or proteins whose molecular weights fall within a wider range as well as the separation and purification requiring a high rate of recovery, which have never been able to be accomplished by the use of the conventional agarose and polyacrylamide gels and the novel gel would permit the improvement of the gel electrophoresis technique which is quite important as an isolation/analysis method used in the fields of, for instance, biochemistry and medicine.

The present invention permits the easy preparation of a gel for electrophoresis having gel strength and pore size adjusted to desired levels. In addition, the use of the gel of the present invention would permit the efficient isolation, purification and/or recovery of nucleic acids, and proteins.

**Claims**

1.  A gel for electrophoresis comprising a gel prepared from a glucan, which has a single-stranded structure and has β-1,3-glucoside bonds as a main chain and β-1,6-glucoside bonds on side chains.

2. A gel for electrophoresis comprising a gel prepared from a mixture of a glucan, which has a single-stranded structure and has β -1,3-glucoside bonds as a main chain and β -1,6-glucoside bonds on side chains, and a second polysaccharide other than the glucan.

3. A gel for electrophoresis comprising a gel prepared from a mixture of a glucan, which has a single-stranded structure and has β-1,3-glucoside bonds as a main chain and β-1,6-glucoside bonds on side chains, and a polyacrylamide-forming composition.

4. A gel for electrophoresis comprising a gel prepared from a mixture of a glucan, which has a single-stranded structure and has β -1,3-glucoside bonds as a main chain and β-1,6-glucoside bonds on side chains; a second polysaccharide other than the glucan; and a polyacrylamide-forming composition.

5. The gel for electrophoresis as set forth in any one of claims 1 to 4, wherein the gel is a xerogel.

6. A method for the preparation of a gel for electrophoresis comprising the steps of dissolving a glucan, which has β-1,3-glucoside bonds as a main chain and β-1,6-glucoside bonds on side chains, in a first solvent which can dissociate the helical structure of the glucan to thus form single-stranded glucan; removing the first solvent; dissolving the single-stranded glucan in a second solvent capable of dissolving the same; and then heat-treating the resulting solution.

7. A method for the prep aration of a gel for electrophoresis comprising the steps of dissolving a glucan, which has β -1,3-glucoside bonds as a main chain and β-1,6-glucoside bonds on side chains, in an aqueous alkaline solution, and then neutralizing the resulting aqueous alkaline solution by the addition of a substance having an ability to neutralize alkali.

8. A method for the preparation of a gel for electrophoresis comprising the steps of dissolving a glucan, which has β-1,3-glucoside bonds as a main chain and β -1,6-glucoside bonds on side chains, in an aqueous alkaline solution; neutralizing the resulting aqueous alkaline solution by the addition of a substance having an ability to neutralize alkali; and then heat-treating the resulting solution.

9. A method for the preparation of a gel for electrophoresis comprising the steps of dissolving a glucan, which has β-1,3-glucoside bonds as a main chain and β-1,6-glucoside bonds on side chains, in a first solvent which can dissociate the helical structure of the glucan to thus form single-stranded glucan; removing the first solvent; dissolving the single-stranded glucan and a second polysaccharide other than glucan in a second solvent; and then heat-treating the resulting solution.

10. A method for the preparation of a gel for electrophoresis comprising the steps of dissolving a glucan, which has β-1,3-glucoside bonds as a main chain and β-1,6-glucoside bonds on side chains, and a second polysaccharide other than glucan in an aqueous alkaline solution; and then neutralizing the resulting aqueous alkaline solution by the addition of a substance having an ability to neutralize alkali.

11. A method for the preparation of a gel for electrophoresis comprising the steps of dissolving a glucan, which has β-1,3-glucoside bonds as a main chain and β -1,6-glucoside bonds on side chains, and a second polysaccharide other than glucan in an aqueous alkaline solution; neutralizing the resulting aqueous alkaline solution by the addition of a substance having an ability to neutralize alkali; and then heat-treating the resulting solution.

12. A method for the preparation of a gel for electrophoresis comprising the steps of dissolving a glucan, which has β-1,3-glucoside bonds as a main chain and β -1,6-glucoside bonds on side chains, in a first solvent which can dissociate the helical structure of the glucan to thus form single-stranded glucan; removing the first solvent; dissolving the single-stranded glucan and a polyacrylamide-forming composition in a second solvent; and then heat-treating the resulting solution.

13. A method for the preparation of a gel for electrophoresis comprising the steps of dissolving a glucan, which has β-1,3-glucoside bonds as a main chain and β-1,6-glucoside bonds on side chains, and a polyacrylamide-forming composition in an aqueous alkaline solution; and then neutralizing the resulting aqueous alkaline solution by the addition of a substance having an ability to neutralize alkali.

14. A method for the preparation of a gel for electrophoresis comprising the steps of dissolving a glucan, which has β-1,3-glucoside bonds as a main chain and β -1,6-glucoside bonds on side chains, and a polyacrylamide-forming composition in an aqueous alkaline solution; neutralizing the resulting aqueous alkaline solution by the addition of a substance having an ability to neutralize alkali; and then heat-treating the resulting solution.

15. A method for electrophoresis **characterized in that** the method uses the gel for electrophoresis as set forth in any one of claims 1 to 5, or a gel for electrophoresis prepared according to the method as set forth in any one of claims 6 to 14, as a support.

16. A method for isolating and/or purifying a nucleic acid or a protein **characterized in that** the method uses the gel for electrophoresis as set forth in any one of claims 1 to 5, or a gel for electrophoresis prepared according to the method as set forth in any one of claims 6 to 14, as a support.

17. A method for isolating and/or purifying a nucleic acid or a protein **characterized in that** the method uses the gel for electrophoresis as set forth in any one of claims 1 to 5, or a gel for electrophoresis prepared according to the method as set forth in any one of claims 6 to 14, as a support and that the gel obtained after the electrophoresis is treated with an enzyme.

18. Use of a glucan, which has a single-stranded structure and has β-1,3-glucoside bonds as a main chain and β1,6-glucoside bonds on side chains, for the preparation of a gel for electrophoresis.

# FIG.1

250 kDa
150
100
75
50
37
25

Example          Comparative Example (1)          Comparative Example (2)

# FIG.2

← 50 kDa

← 50 kDa

Molecular Weight 150,000, 10%          Molecular Weight 2,000,000, 2%

# FIG.3

Example

250    150    100    75    kDa

Comparative Example

# FIG.4

Example

900~1,000    720    669    440    232kDa

Comparative Example

140    67kDa

# FIG.5

Example     Comparative Example

# FIG.6

250  150  100  75kDa

# FIG.7

Example                Comparative Example

# FIG.8

Sample Groove

250
150
100
75

50
37

25

20

15
kDa

BPB Line

BPB Line

Example                Comparative Example

# FIG.9

| | |
|---|---|
| 34.5 | |
| 27.4 | |
| 15.2 | |
| 7.9 | |
| 4.0 | |

kDa

Example                    Comparative Example

# FIG.10

# FIG.11

Sample Groove

250
150
100
75
50

37

25
20
15

kDa

Example                    Comparative Example

# FIG.12

SPG Gel Having Molecular Weight Gradient        4-20% Concentration Gradient PA Gel
(450,000-2,000,000)

## FIG.13

## FIG.14

Example 6       Schizophyllan (2.5%)       Schizophyllan (2.5%)

/PA (0.5%)             /PA (1%)

## FIG.15

Example            pI            Comparative Example

## FIG.16

Acidic                                    Basic

232
140
66

kDa

# FIG.17

Acidic                                                 Basic

# FIG.18

Mr(kDa)

— 669

— 440

— 232

— BPB

SPG Gel
(Mw=2,000,000; 2.5%)

**INTERNATIONAL SEARCH REPORT**

International application No.

PCT/JP2004/002163

| A. | CLASSIFICATION OF SUBJECT MATTER |
|---|---|

Int.Cl⁷ G01N27/447

According to International Patent Classification (IPC) or to both national classification and IPC

| B. | FIELDS SEARCHED |
|---|---|

Minimum documentation searched (classification system followed by classification symbols)

Int.Cl⁷ G01N27/447, C08B37/00

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

JICST(JOIS), CAPLUS(STN), WPI

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 62-30102 A (FMC Corp.),<br>09 February, 1987 (09.02.87), | 1,2,5,7,8,<br>10,11,15–18 |
| Y | Page 3, upper left column, line 11 to upper<br>right column, line 14; page 4, lower right<br>column, lines 6 to 14; page 5, lower left<br>column, line 13 to page 6, upper right column,<br>line 3; page 6, lower left column, lines 5 to 7<br>& US 4774093 A          & DE 3621303 A<br>& GB 2176795 A          & SE 8602805 A | 3,4,6,9,<br>12–14 |
| Y | JP 48-44865 B (Takeda Chemical Industries, Ltd.),<br>27 December, 1973 (27.12.73),<br>Full text<br>& FR 2120884 A          & DE 2164912 A<br>& GB 1379406 A          & IT 986833 B<br>& SE 374487 B          & US 3899480 A<br>& CA 976801 A          & NO 135965 B | 6,9,12–14 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 01 June, 2004 (01.06.04) | 15 June, 2004 (15.06.04) |

| Name and mailing address of the ISA/<br>Japanese Patent Office | Authorized officer |
|---|---|
| Facsimile No. | Telephone No. |

Form PCT/ISA/210 (second sheet) (January 2004)

**INTERNATIONAL SEARCH REPORT**

| International application No. |
| --- |
| PCT/JP2004/002163 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | US 3578604 A (Jose Uriel),<br>11 May, 1971 (11.05.71),<br>Full text<br>& FR 1483742 A          & FR 1501992 A | 3,4,12-14 |
| A | JP 2628229 B (FMC Corp.),<br>09 July, 1997 (09.07.97),<br>Claims 24, 26<br>& WO 93/8200 A1          & CA 2120230 A<br>& AU 2764592 A          & EP 614460 A<br>& JP 6-510560 A          & US 5688775 A | 2,4,9-11 |
| A | WO 02/97421 A1 (Japan Science and Technology Corp.),<br>05 December, 2002 (05.12.02),<br>Full text<br>& CA 2448727 A | 1-18 |
| A | Toshio Yanaki, Melting Behaviour of a Triple Helical Polysaccharide Schizophyllan in Aqueous Solution, Carbohydrate Polymers, Vol.5, No.4, 1985, pages 275 to 288 | 1-18 |
| A | Takashi Norisuye, Triple Helix of a Schizophyllum Commune Polysaccharide in Aqueous Solution, Journal of Polymer Science: Polymer Physics Edition, Vol.18, No.3, 1980, pages 547 to 558 | 1-18 |
| A | JP 3-163102 A (Takeda Chemical Industries, Ltd.),<br>15 July, 1991 (15.07.91),<br>Full text<br>& CA 2021294 A          & EP 409488 A | 1-18 |
| A | JP 51-142552 A (Hercules Inc.),<br>08 December, 1976 (08.12.76),<br>Full text<br>& CA 1068264 A          & US 4012333 A<br>& GB 1490322 A | 1-18 |

Form PCT/ISA/210 (continuation of second sheet) (January 2004)

**INTERNATIONAL SEARCH REPORT**

International application No.

PCT/JP2004/002163

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:

```
  1: Claims 1, 5, (6-8, 15-18)
  2: Claims 2, (7, 9-11)
  3. Claims 3, (8, 12-14)
  4: Claim 4
```

The matter common to the above 1-4 invention groups is "a gel for electrophoresis comprising a gel produced from a glucan of single stranded structure having a main chain of β-1,3-glucoside bond and a side chain of β-1,6-glucoside bond". However, as a result of search, it has been found (continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest.

☐ No protest accompanied the payment of additional search fees.

Form PCT/ISA/210 (continuation of first sheet (2)) (January 2004)

**INTERNATIONAL SEARCH REPORT**

| International application No. |
|---|
| PCT/JP2004/002163 |

Continuation of Box No.III of continuation of first sheet(2)

that this matter is disclosed or suggested in the reference JP 62-30102 A. Consequently, the common matter falls within the category of prior art, so that it cannot be recognized as constituting special technical features.

Therefore, the above 1-4 invention groups fail to satisfy the requirement of unity of invention.